# EUROPÄISCHE PATENTSCHRIFT

(11) **EP 0 485 483 B1**
(45) Veröffentlichungstag und Bekanntmachung des Hinweises auf die Patenterteilung: **26.01.1994**
(21) Anmeldenummer: 90912337.4
(22) Anmeldetag: 06.08.1990
(51) Int. Cl.: A47C 7/46, E04G 11/36, A43D 3/14

(54) **WÖLBMECHANIK**
CAMBERING MECHANISM
MECANISME DE CINTRAGE

(30) Priorität: 04.08.1989 AT 1882/89; 12.09.1989 AT 2133/89
(43) Veröffentlichungstag der Anmeldung: 20.05.1992
(73) Patentinhaber: Schuster, Wilhelm, Ing., A-4030 Linz (AT)
(72) Erfinder: SCHUSTER, Wilhelm, A-4030 Linz (AT); SCHUSTER, Wilhelm, A-4210 Gallneukirchen (AT)
(74) Vertreter: Piso, Eberhard, Dr.
(86) Internationale Anmeldenummer: AT9000078
(87) Internationale Veröffentlichungsnummer: WO9101666

(56) Entgegenhaltungen:
- EP-A- 0 006 840
- EP-A- 0 169 293

## Beschreibung

Die Erfindung betrifft eine Wölbmechanik mit einem Druckelemente und mehrere Querverbindungsorgane umfassenden oder aus einem Stück bestehenden Gesamtdruckelement sowie wenigstens einem an diesem angreifenden Zugelement und einer zugeordneten Spannvorrichtung dafür. Die Wölbmechanik wird für Rückenlehnen bei Fahrzeug-, Büro- oder Wohnmöbelsitzen bzw. Sitzen aller Art, sowie für den Einsatz insbesonders bei medizinischen bzw. orthopädischen Geräten oder Vorrichtungen, z.B. Mieder oder Schuheinlagen, bei Baugerüsten oder Verschalungen, zur Herstellung von Bootskörpern usw. verwendet.
Beim Verstellen der Wölbung, z.B. einer Rückenlehne wandert der Wölbscheitel herkömmlicherweise je nach Konstruktion der Wölbmechanik immer gleichbleibend über die Höhe der Lehne. Er paßt sich nicht ausreichend den wandernden Scheiteln einer sich mehr oder weniger krümmenden Wirbelsäule bzw. einer ärztlich empfohlenen bzw. vom Benutzer gewünschten Streckung der Wirbelsäule an. Bei Konstruktionen mit Sitzschalen geht bei zunehmender Wölbung üblicherweise auch der notwendige Seitenhalt verloren. Die EP-A 169 293 zeigt eine Rückenlehne für einen Automobilsitz mit einem zwingenden Rahmen,in den ein Stützteil federnd eingehängt ist. Der Stützteil besteht aus zwei über die Federn mit dem Rahmen verbundenen Seitenteilen und diese verbindenden Querelementen. Mittig ist eine über ein Handrad betätigbare Einstellwelle angeordnet, die sogenannten Eingreifeinrichtungen durchläuft, welche wiederum über biegsame Verbindungsorgane mit den äußersten Punkten der Seitenteile verbunden sind. Bei Verdrehen des Handrades soll eine Wölbung des Stützteiles erfolgen, wobei jedoch anfangs grundsätzlich bloß eine Dehnung der Federn eintreten wird. Diese Konstruktion unterstützt lediglich wenige Wirbel; die darunter oder darüber liegenden Wirbel haben keine gleich starke Stützung. Ein frei hängender oder in der Polsterung schwebender Einbau des Stützteiles in eine Lehne ist nicht möglich.
Die DE-OS-2804703 zeigt eine Rückenlehne, bei welcher eine mit einander gegenüberliegend angeordneten Laschen versehene Platte über miteinander in Eingriff stehende Führungsschienen gewölbt werden kann. Die gesamte Platte kann über einen Kipphebel höhenverstellt werden.
Die EU-A1-322535 zeigt eine Rückenstütze mit einem oberen und einem unteren Stützband, die über ein vertikales flexibles Band und eine zwischen diesen gespannte Feder verbunden sind, wobei am unteren Stützband eine Verstellwelle über ein Getriebe angreift, um durch Biegen des flexiblen Bandes eine Wölbung der Rückenlehne zu erzielen.
Weiters sind auch Rückenlehnen aus geschäumtem Material bekannt, die sich der Form des Rückgrats anpassen sollen.
Ein anderes Beispiel zeigt die DE-OS-3440846 mit einem Fahrzeugsitz, dessen Rückenlehne einen Rahmen und eine in diesen eingesetzte Platte umfaßt. In der Platte sind vertikal verlaufende Längsschlitze eingearbeitet, in welchen eine Lendenstützvorrichtung bewegbar angeordnet ist. Die Lendenstützvorrichtung kann über ein Handrad mittels einer am Rahmen angelenkten Welle in ihrer Steifigkeit verstellt und vertikal eingestellt werden. Die Lendenstützvorrichtung steht in direkter Verbindung mit dem Rahmen. Dadurch werden alle Schwingungen des Fahrzeuges von der Straße voll auf den Rücken des Fahrers weitergeleitet.
Die bekannten Mechanismen lassen keine Anpassung an veränderte bzw. sich verändernde Wirbelsäulenkurven zu. So ändert sich z.B. bei stundenlangen Autofahrten die Wirbelsäulenkrümmung durch die notwendige Haltearbeit stark, wenn das gesamte Gewicht des Oberkörpers auf Grund der ungünstigen Stellung (zum Lenkrad ausgestreckte Hände) gehalten werden muß. Diese Muskel- bzw. Haltearbeit muß für das Aufrechthalten des Körpers bei falsher oder nicht vorhandener Stützung voll von Muskulatur und Skelett geleistet werden und führt logischerweise zu starken Ermüdungserscheinungen sowie Muskelverspannungen. Die eingesetzten Muskeln benötigen für diese Arbeit bis zu 40 mal mehr Blut bzw. die 40-fache Energie gegenüber einem anatomisch gestützten Oberkörper (dessen Muskeln keine Haltearbeit leisten müssen).
Die Stütz- bzw. Haltearbeit soll daher voll von der Wölbmechanik geleistet werden können, und zwar bei allen Wirbelsäulen (deren Kurven so verschieden sind wie die Gesichter der Menschen und die sich außerdem von Stunde zu Stunde je nach Müdigkeit, Anstrengung und zu leistender Haltearbeit verändern - die Körpergröße des Menschen nimmt von morgens bis abends um etwa 2 - 4 cm ab, und die Rückenwölbung verändert sich in diesem Zeitraum um bis zu 10 cm). Eine optimale Wölbmechanik muß daher in einer Weise differenziert wirken, daß sie z. B. bei Verwendung in einer Rückenlehne jede Rückenform geeignet abstützt, d.h. mindestens dreifach und verschieden stark wie folgt: 1. sehr stark und fest im Beckenbereich nach vorne (gegen das Rückwärtskippen des Beckens), 2. Etwas sanfter aber gleich fest radial und senkrecht jeden Wirbel im Lenden-(Lordose)-bereich einzeln und 3. wesentlich fester und senkrecht nach oben im Brustbereich unter den Schultern gegen das Gewicht des Oberkörpers. Die zusätzliche Stützung des Nackenbereiches kann eine weitere Forderung sein.
Eine einmal eingestellte und an die Wirbelsäulenform angepaßte Wölbung darf natürlich auch bei vollem Andruck ihre eingestellte Form nicht mehr ändern, um eine vollständige Stützung unabhängig von der augenblicklichen Krümmung der Wirbelsäule des Benutzers zu garantieren.
Die für eine ergonomisch optimale Rückenlehne mindestens notwendige Dreifachstützung wird von den bekannten Einrichtungen nicht oder unvollständig erfüllt.
Aufgabe der Erfindung ist es daher, die oben genannten Nachteile zu beseitigen und eine ergonomisch wölbbare und höhenverstellbare Wölbmechanik zu schaffen, welche ein breites Anwendungsspektrum zuläßt und bei Verwendung als Lordosenstütze eine Mehrfach-, zumindest aber eine Dreifachstützung, garantiert.
Die Erfindung löst die Aufgabe dadurch, daß im oberen und unteren Bereich, vorzugsweise an einem Querverbindungsorgan, des zu wölbenden Abschnittes des Gesamtdruckelementes ein oder mehrere in der und/oder parallel zur Mittelachse des Gesamtdruckelementes verlaufende vertikale Zug- oder Druckelemente, vorzugsweise Stab oder Seil, angreifen.
Bei Betätigung der Spannvorrichtung bzw. des Druckmechanismus erfolgt die Wölbung der Mechanik daher derart, daß der Wölbscheitel, bezogen auf seine relative Höhenlage, erhalten bleibt oder sich verschiebt.
Die Relativlage des Wölbscheitels bezieht sich dabei entweder auf einen verwendeten Rahmen oder eine Sitzfläche oder auch relativ zum Lordosenscheitel des Menschen, d.h. wenn sich dieser im Sitz bewegt und seine Lordose dabei eine Veränderung erfährt, soll der Wölbscheitel der Mechanik trotzdem stets an diese angepaßt bleiben.

Ein andere Ausführungsform der Erfindung sieht vor, daß sie einen Rahmen und in den Rahmen eingesetzte, von mindestens einer Verstellvorrichtung betätigbare Druckelemente, vorzugsweise Druckbänder oder -flächen, umfaßt, und daß die vertikal verlaufenden Abschnitte des Rahmens über mindestens eine Verstellvorrichtung längenvariable Druckelemente sind.

Bei einer weiteren Ausführungsvariante der Erfindung ist vorgesehen, daß die Wölbmechanik einen an mehreren Stellen geschlitzten, überlappenden oder faltenbalgähnlichen Wölbkörper umfaßt und daß zumindest an diesen Stellen mit einem oder mehreren Spannmechanismen versehene Zugelemente zum Schließen bzw. Öffnen dieser Bereiche angreifen, wodurch eine Krümmung des Wölbkörpers in jede beliebige, vorbestimmbare Richtung erzielbar ist.

Weitere Merkmale der Erfindung sind den Unteransprüchen, der Beschreibung und der angeschlossenen Zeichnung zu entnehmen.

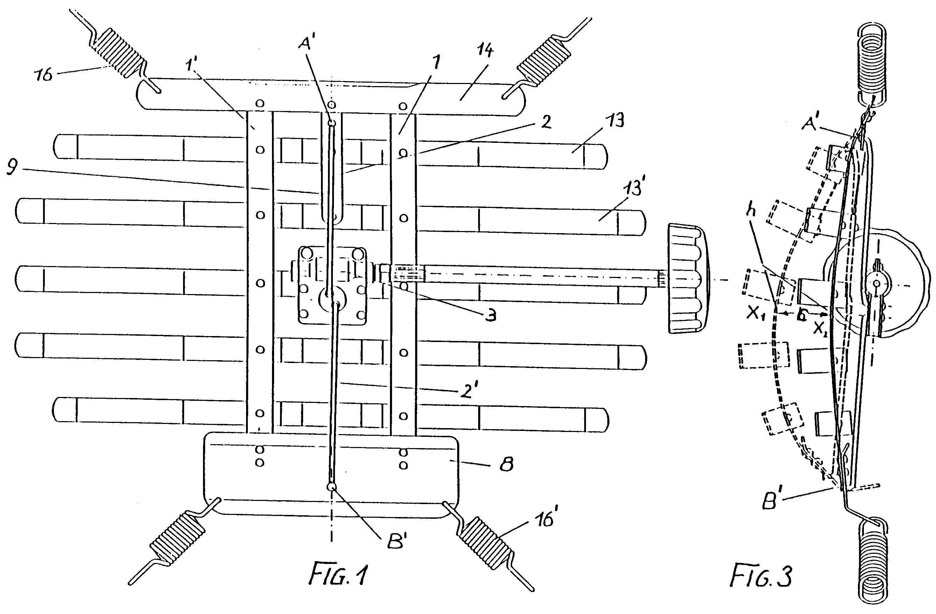

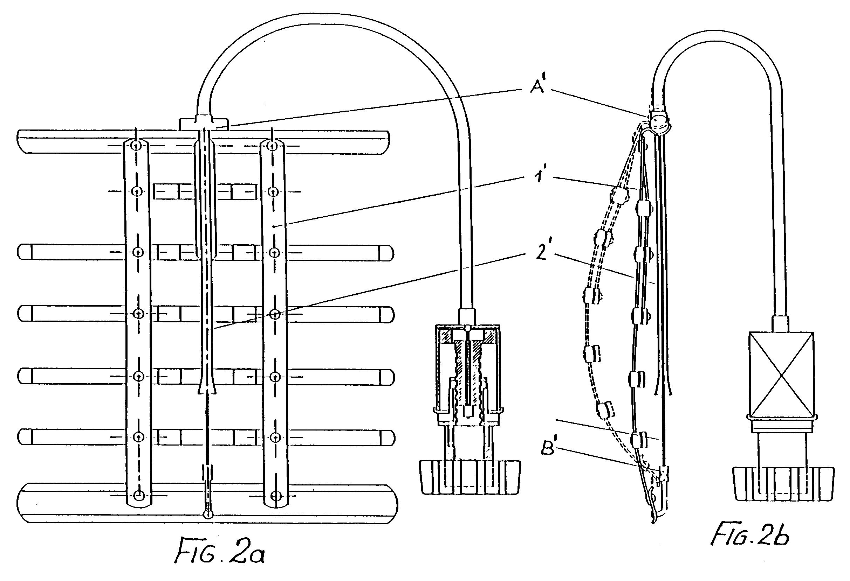

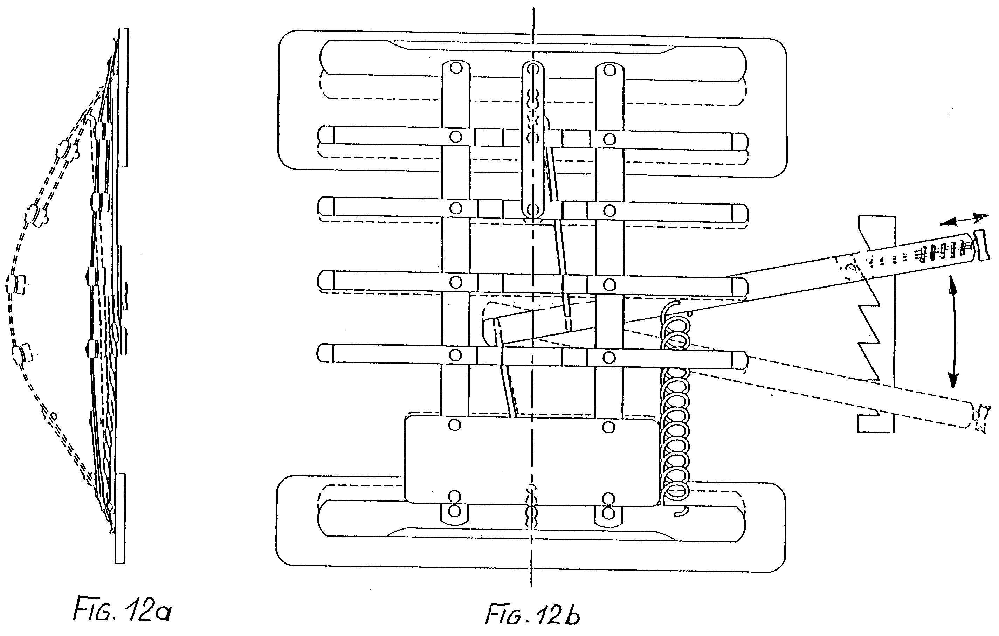

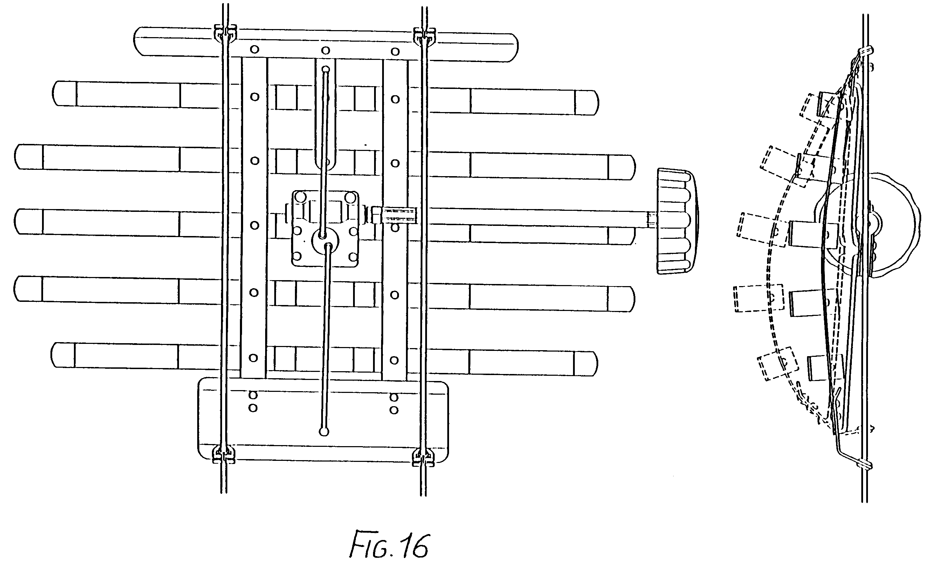

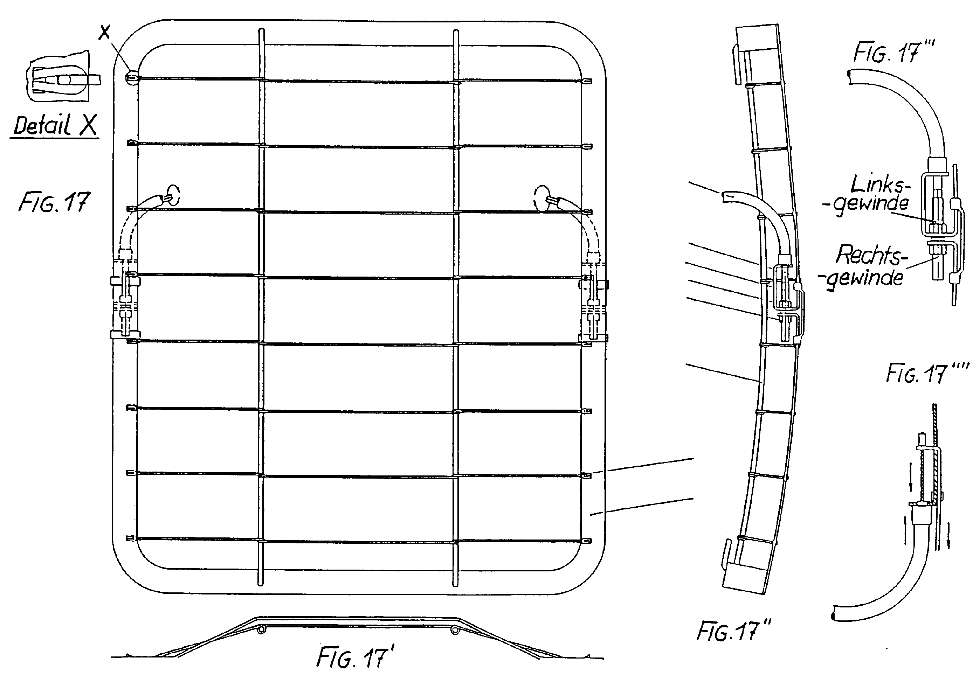

Es zeigen Fig. 1 bis 24 unterschiedliche Ausführungsformen der erfindungsgemäßen Wölbmechanik.

In Fig. 1 sind zwei vertikal verlaufende, im Abstand voneinander zugeordnete Druckstäbe 1, 1' mit senkrecht dazu verlaufenden Querrippen 13, 13' verbunden. Den oberen Abschluß der Reihe von Querrippen bildet ein Abschluß- oder Gleitband 14, den unteren Abschluß eine Stützplatte 8 für den Beckenrand. Sowohl das Abschlußband 14 als auch die Stützplatte 8 ist an ihren äußeren Ecken mit Bohrungen versehen, in welche Federn 16, 16' eingehängt sind, die wiederum in einen nicht gezeigten Rahmen der Rückenlehne eingreifen. Zwischen und parallel zu den beiden Druckstäben 1, 1' verläuft vom Abschlußband 14 weg bis in den Mittelbereich der Wölbmechanik ein Sperr- oder Zughilfsband 9, in dessen oberen Bereich ein als Stange ausgebildetes Zugelement 2, z.B. eine Fahrradspeiche, eingehängt ist. A' ist der obere Angriffspunkt der Zugkraft. Ein weiteres Zugelement 2' ist in der Stützplatte 8 bei B', welche den unteren Angriffspunkt der Zugkraft bildet, eingehängt. Die beiden Zugelemente 2, 2' sind weiteres mit einem im mittleren Bereich der Wölbmechanik angeordneten Spannschloß 3 verbunden, welches über eine aus der Wölbmechanik führende Welle, an deren Ende ein Handrad angeordnet ist, betätigbar ist.

Beim Drehen des Handrades beginnt sich die Mechanik zu wölben, da die beiden Zugelemente (2, 2') zusammengezogen werden.

In Fig. 3 ist der Weg (h) zwischen X₁ und X₂ bei Wölbung der Mechanik dargestellt, den der aus seiner ursprünglichen Ebene unverrückte Wölbungsscheitel zurücklegt.

Bei der Ausführung nach Fig. 2 ist die Spannvorrichtung ein Bowdenzug, wobei des Zugelement 2' ein in einer Hülse verlaufender Draht ist. Der obere und untere Angriffspunkt der Spannvorrichtung am Wölbkörper ist wieder mit A' und B' gekennzeichnet.

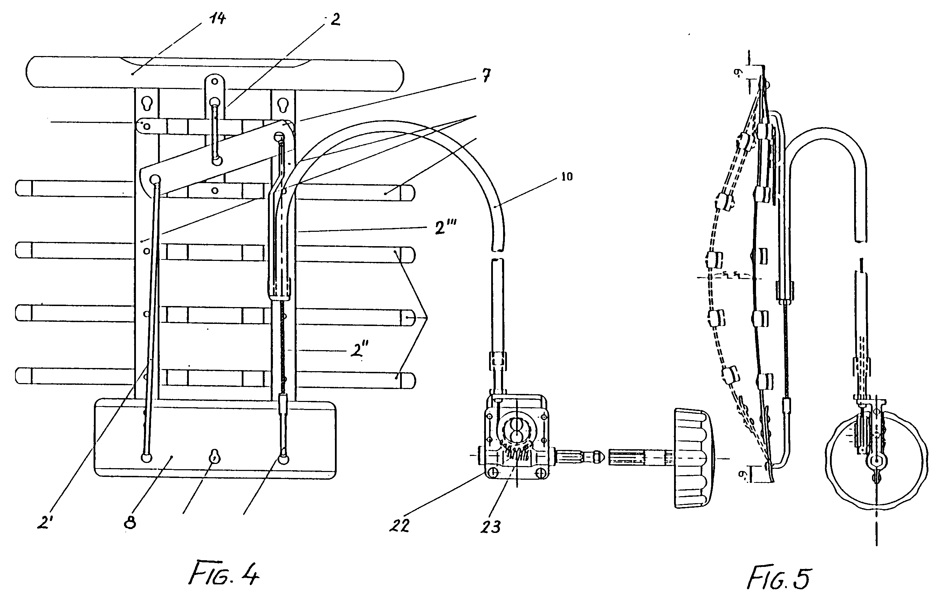

Auch bei der Ausführung nach Fig. 4 ist die Spannvorrichtung durch einen Bowdenzug 10 realisiert. Das über einen Gewindeantrieb bzw. ein Schneckengetriebe 22, 23 in seiner Hülse verschiebbare Zugelement 2'' ist ein Draht bzw. ein Bowdenzug, der an der rechten Seite der Stützplatte 8 angreift. Die Hülse ist im Bereich des Drahtaustritts mit einem weiteren Zugelement verbunden. Dieses Zugelement ist eine Stange 2''', die im rechten Bereich eines Hebels 7 angelenkt ist, der wieder über ein kurzes Zugelement mit dem Sperrhilfsband verbunden ist. Vom linken Rand des Hebels 7 führt eine Zugstange zum linken Bereich der Stützplatte 8. Durch diese Konstruktion der Spannvorrichtung ist wieder eine Wölbung der gesamten Mechanik bei stillstehendem Wölbungsscheitel erzielbar, da bei Betätigung des Seilzuges die links außen verlaufende Zugstange mitgenommen wird.

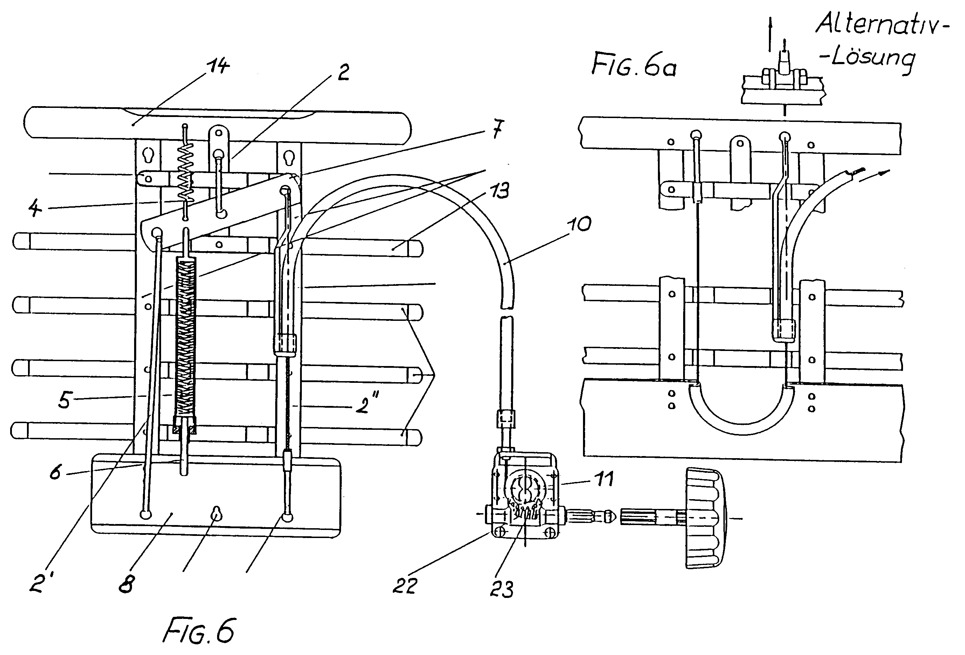

Die in Fig. 6 dargestellte Ausführungsform basiert im wesentlichen auf der in Fig. 4 gezeigten, allerdings ist zwischen dem Hebel 7 und dem Abschlußband noch eine Zugfeder 4 und in Verlängerung dieser Feder zwischen dem Hebel 7 und der Stützplatte 8 eine Druckfeder 5 vorgesehen, wobei zwischen der Druckfeder 5 und der Stützplatte 8 eine Spannstellschraube 6 vorgesehen ist.

Die Funktion des Hebels kann durch eine in der Stützplatte 8 angeordnete Umlenkrille ersetzt werden, wobei das als Seil ausgebildete Zugelement aus der Hülse des Bowdenzuges kommend über die Rille läuft, umgelenkt wird und bis zum Abschlußband läuft, an welchem es einen Fixpunkt hat. (Fig. 6a)

Ensprechend Fig. 4 verläuft vom Austritt des Drahtes aus der Hülse 10 parallel zu diesem eine Zugstange.

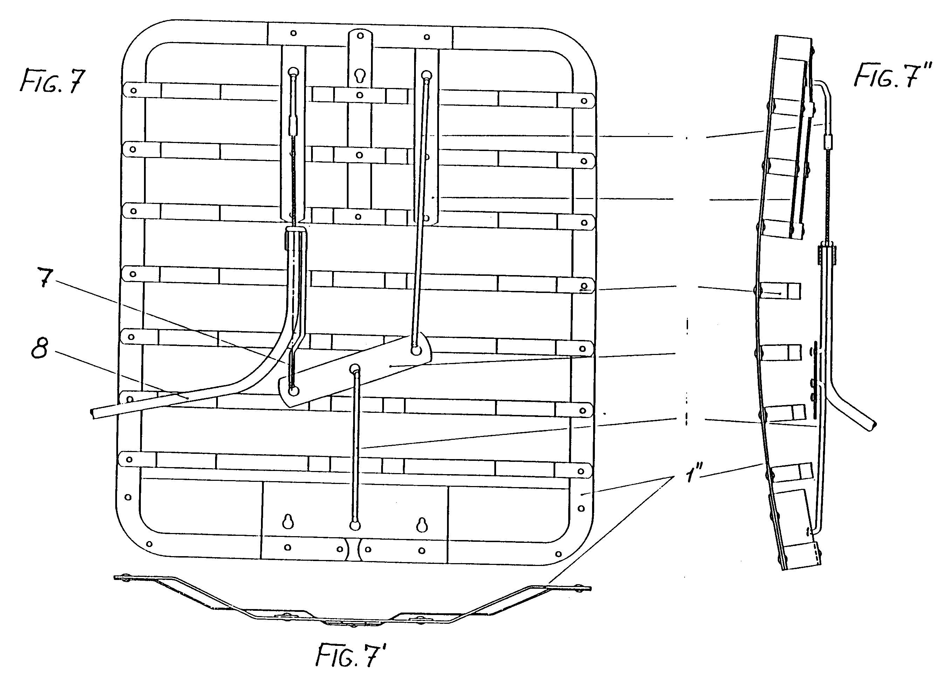

Fig. 7 zeigt eine Ausführung der Wölbmechanik, bei der sich die Druckstäbe 1'' am äußersten Rand der Konstruktion befinden und die lotrechten Abschnitte eines Rahmens bilden. Die Stützplatte für den Beckenrand ist über einen Zugstab mit einem Hebel verbunden, der wiederum, ausgehend von seinen beiden Enden, einerseits mit einem ersten Zughilfsband und anderseits mit der Hülse des Zugkabels eines Bowdenzuges verbunden ist, wobei das Kabel an einem zum ersten Hilfsband um die Mittellinie der Konstruktion spiegelbildlich angeordneten zweiten Hilfsband angreift.

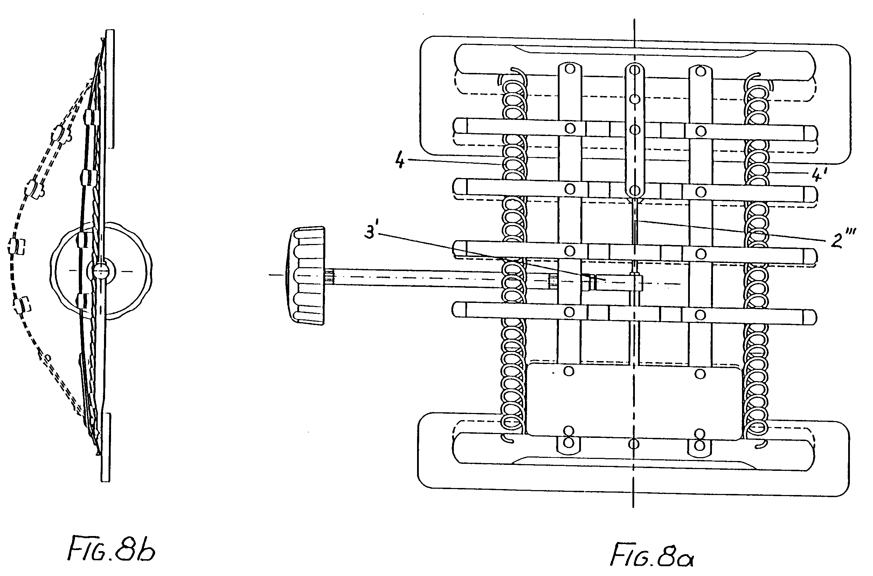

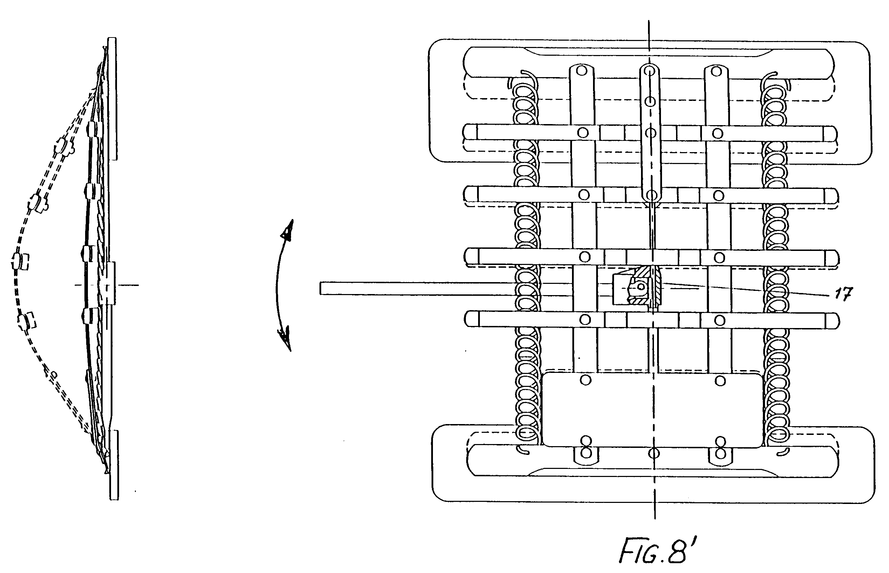

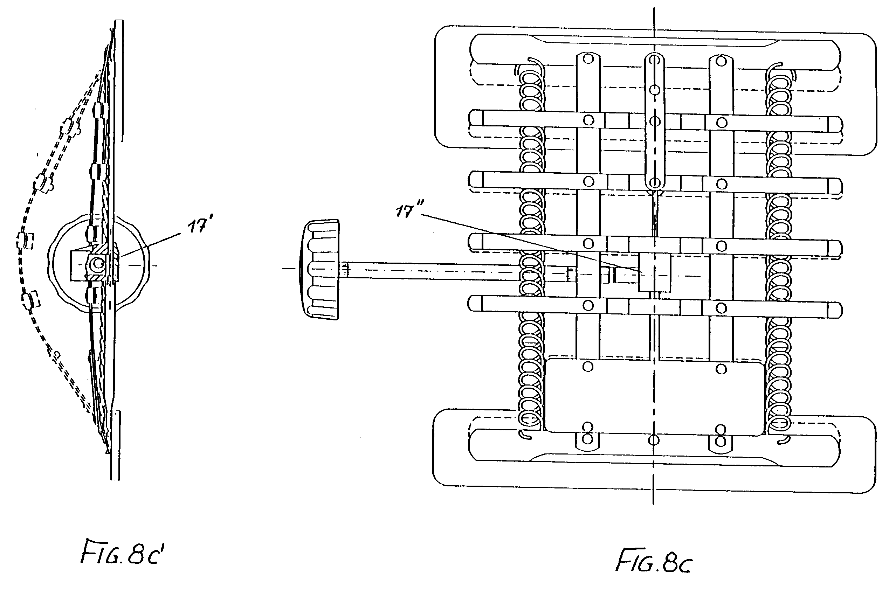

Fig. 8 zeigt eine Ausführung der Wölbmechanik mit zwei parallelen, lotrechten Druckstäben, senkrecht dazu angeordneter Querrippe und einem in der senkrechten Mittelachse der Konstruktion liegenden Zughilfsband. An diesem Zughilfsband ist ein Zugelement 2''' angeordnet, welches mit einem über ein Handrad betätigbaren Spannschloß 3' verbunden ist. Die äußersten Bereiche der Wölbmechanik sind mit zwei zu den Druckstäben parallelen und außerhalb dieser angeordneten Zugfedern 4, 4' verbunden. Die strichliert dargestellten Teile zeigen die Stellung der Konstruktion nach einer Wölbung. Die Betätigung kann statt über das Spannschloß 3' auch über einen Fixierexzenter 17', 17'' erfolgen (Fig. 8c, 8c').

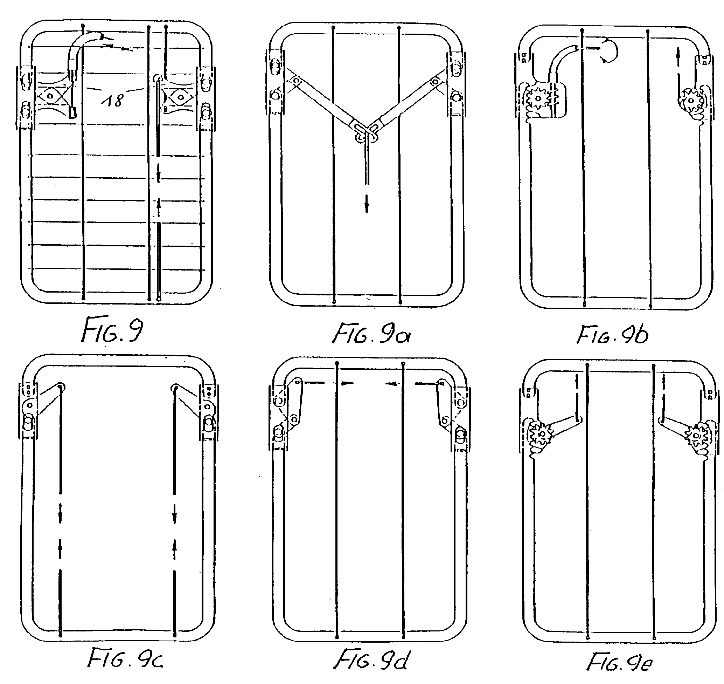

Nach einem weiteren Erfindungsgedanken umfaßt die Wölbmechanik einen Rahmen, dessen senkrechte Holme die Druckelemente bilden. Der Rahmen ist horizontal zweigeteilt. Wie in Fig. 9, 9a, 9b, 9c, 9d, 9e dargestellt, sind die mit Abstand zueinander angeordneten Enden des Rahmens jeweils mit einem Hebelarm verbunden, wobei die jeweils benachbarten Hebel miteinander verbunden und an Zugelemente angelenkt sind. Darüber hinaus sind die offene Bereiche im Rahmen bildenden Enden mit je einer Hülse an jeder Seite des Rahmens versehen.

Wie in Fig. 9a dargestellt, sind jeweils zwei benachbarte Hebel zentral miteinander verbunden, wobei jeweils der unten angeordnete Hebel mit dem oberen Querholm des Rahmens durch ein Zugelement verbunden ist und die beiden oben angeordneten Hebel eine Verbindung mit dem unteren Querholm aufweisen, in deren Verlauf eine nicht dargestellte Verstelleinrichtung zwischengeschaltet ist.

Bei Betätigung dieser Verstelleinrichtung wölben die Zugelemente primär die Wölbung an den äußeren Rändern einer beispielsweise schalenförmig ausgebildeten Rückenlehne, indem die Druckelemente eine Verlängerung erfahren. An Stelle von Druckstäben können auch Druckflächen verwendet werden.

Es entsteht also primär eine Aktivwölbung des Schalenrandes, wobei nach innen gewölbte Querrippen (-drähte, -bänder, -netze) in jenem Bereich, in welchem ebenfalls eine Wölbung aus der Schale erfolgen soll, dadurch aktiv mitgewölbt werden, daß sie ihrerseits fix oder federnd mit den beiden (oder auch mehreren) aktiven Wölbrändern der Schale mitgenommen werden. Die Schalenform einer Fläche bleibt auch unabhängig von der Intensität der Wölbung erhalten; die Schalenform kann sogar noch intensiviert werden. Beispielsweise kann so die Wölbung einer Sitzfläche gesteigert werden, ohne daß sich dabei die Tiefe der Schale verringert.

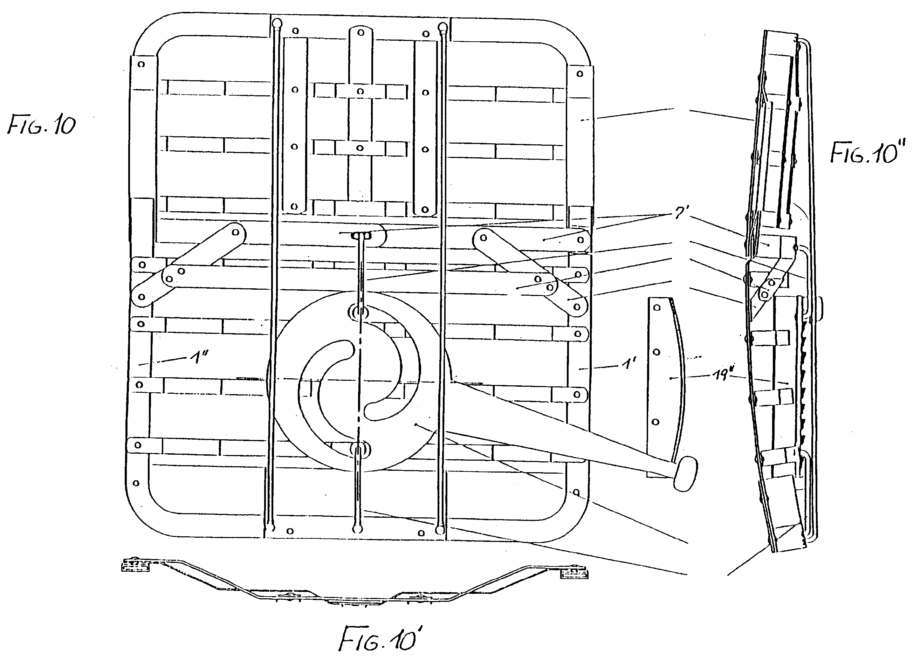

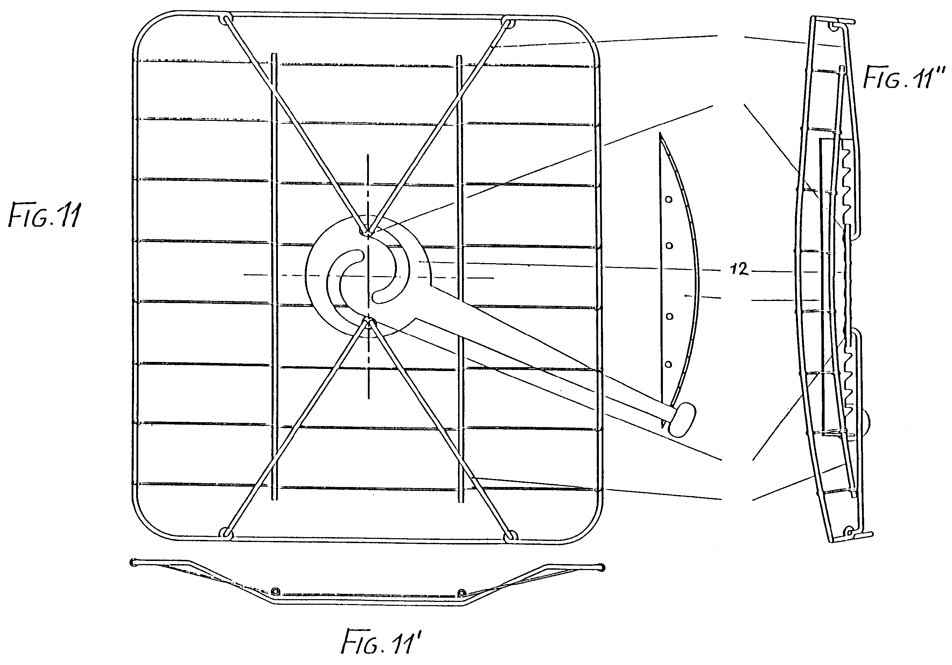

Fig. 10a, b zeigen eine Konstruktion, bei der ebenfalls die an den Enden des geteilten Rahmens angreifenden Hebel über ein Zugelement zu einer Betätigungsvorrichtung führen. Diese Vorrichtung umfaßt eine auf die senkrechte Mittellinie der Konstruktion zentriert angeordnete Scheibe, die über einen Handgriff verdreht werden kann. Der Handgriff wiederum ist in Rasten fixierbar (Fig. 10b). Die Scheibe hat zwei dezentral gegeneinander versetzte, annähernd kreisbogenförmige Ausnehmungen, in welchen je ein zum oberen und ein zum unteren Bereich des Rahmens führendes Zugelement angeordnet ist, und bildet so einen Doppelexzenter. Fig. 10' bzw. 10'' zeigen die Form der Konstruktion vor und nach dem Wölbvorgang. Die in Fig. 10 beschriebene Vorrichtung zum Wölben der Konstruktion findet auch in Fig. 11 Verwendung, wird hier allerdings zentral in der Wölbmechanik eingesetzt, wobei sich von jeweils einer Ausnehmung des Exzenters zwei Zugelemente zu den äußeren Bereichen des Rahmens, symmetrisch zur senkrechten Mittellinie, erstrecken.

Die nach Betätigung der Wölbvorrichtung erzielte Form ist in Fig. 11'' dargestellt.

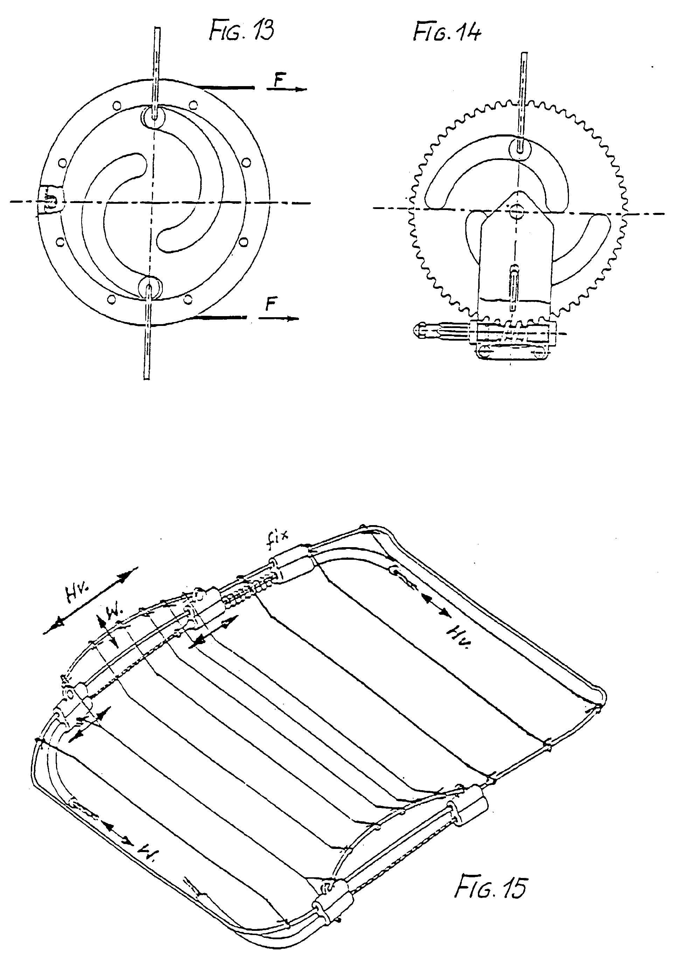

Die Fig. 13, 14 zeigen beispielsweise über einen Seilzug oder eine Zahnrad-Ritzel-Kombination, wobei die Scheibe selbst als Zahnrad ausgebildet ist, betätigbare Exzenterscheiben.

Fig. 12a, b zeigt einen über eine Feder an der unteren Stützplatte angeschlossenen Hebel, der seinerseits über Zugelemente mit dem oberen bzw. unteren Bereich der Wölbmechanik verbunden ist und nach entsprechender Wölbung des Rückenteils in Rasten fixiert werden kann (strichlierte Darstellung).

Fig. 15 zeigt eine Kombinationskonstruktion, bei der sowohl die Höhe als auch die Wölbung einfach verstellt werden kann, wobei die mit "W" bezeichneten Zugelemente für die Wölbung und das mit "HV" bezeichnete Zugelement für die Höhenverstellung verantwortlich sind.

Fig. 16 zeigt eine im wesentlichen der Fig. 1 idente Ausführung der Wölbmechanik, wobei allerdings die gesamte Mechanik beim Wölben entlang zweier um die senkrechte Mittelachse symmetrisch angeordneter Stäbe gleitet.

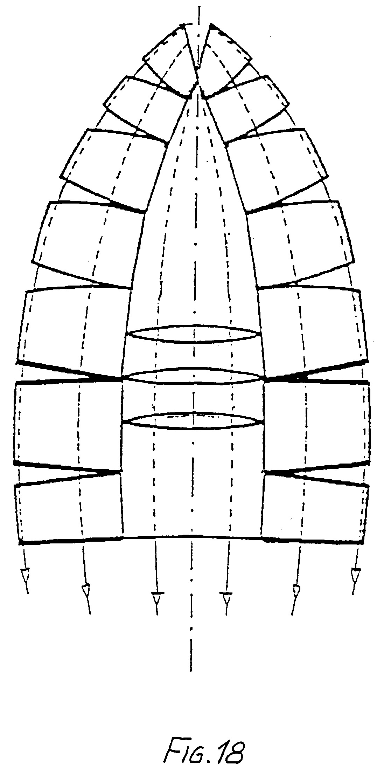

Die in Fig. 1 bis 24 dargestellte Wölbmechanik kann weiters Druckelemente (Stäbe, Flächen, Gitter usw.) aufweisen, die eine Wölbung in mehreren Richtungen erfahren können, indem sie beispielsweise an einer oder mehreren Stellen Unterbrechungen (offene Stellen, Überlappungen), Sperrbänder oder faltenbalgähnliche Bereiche haben (Fig. 18).

Die für derartige Konstruktionen verwendeten, die Druckelemente durchsetzenden bzw. an ihren vorbeiführenden (eventuell mit Abstandhaltern) Zugelemente schließen beim Spannen durch einen oder mehrere Spannmechanismen die offenen bzw. überlappten Zwischenräume bzw. faltenbalgähnlichen Bereiche in den Druckelementen stufig oder stufenlos. Bei Verwendung von Sperrbändern oder durch andere geeignete Mittel versteifte Bereiche unterliegen jedenfalls einer reduzierten oder intensivierten Wölbung. Durch dieses zuvor genannte teilweise oder vollständige Schließen der offenen Stellen bzw. Falten entsteht gegenüber den nicht unterbrochenen bzw. nicht faltenbalgähnlichen Bereichen der Druckelemente, auch in der Querrichtung zu den Zugelementen, eine Wölbung. Herkömmlicherweise kann sich eine Wölbfläche nur etwa parallel zu den bzw. in Richtung der Zugelemente(n) wölben. Durch diese "mehrdimensional" wölbbare Konstruktion kann durch das Schließen einander gegenüberliegender offener Enden einer flachen oder leicht gewölbten Fläche beispielsweise auch eine Kugel oder kugelähnliche Flächen realisiert werden.

Eine derartige Konstruktion kann beispielsweise im Bauwesen bei Schalungselementen oder im Schiffsbau Verwendung finden. Die Wölbfläche kann bereits beispielsweise durch Federkraft vorgewölbt sein und durch leichte Betätigung der Spannvorrichtung in eine andere gleichartige oder entgegengesetzt gerichtete Wölbung gebracht werden. Als Spannvorrichtung für die erfindungsgemäße Wölbmechanik kann auch eine einfache Seilwinde, Spule oder Spindel Verwendung finden, mit welcher auch größere Längenänderungen am Zug- bzw. Druckelement vorgenommen werden können.

Es können auch mehrere Wölbmechaniken verwendet werden, wobei sich deren Wirkungen summieren oder aufheben können, wodurch beispielsweise eine oder mehrere zusätzliche Wölbungen in einer bereits vorhandenen Wölbung realisierbar sind.

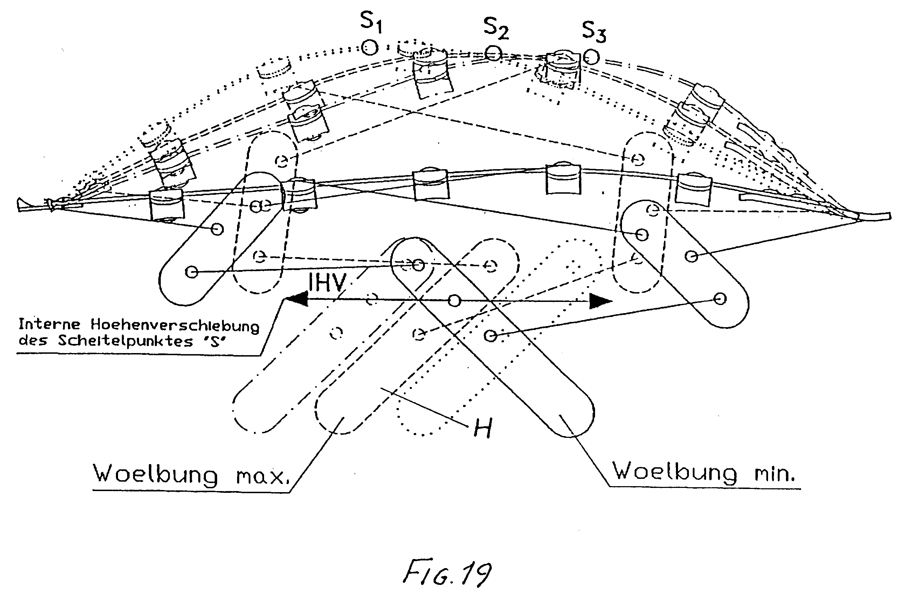

So ist es durch diese Konstruktion möglich, daß, egal wie und welche der zusammengeschalteten Wölbmechaniken einzeln eingestellt sind, bei Entspannung des Hauptzuges auf jeden Fall alle zusammen-, gegeneinander oder überlappend geschalteten Einzel-Wölbmechaniken und die Gesamt-Wölbmechanik sich auf Null oder einen z.B. gewünschten Zwischen- oder Endwert einstellen lassen und sich beim Wiederwölben nur jener Wölbmechanik-Teil wölbt, der laut eingestellten Schlitzen, Steuerhebeln, Exzenter usw. und deren Totgängen (Schlitzen oder sonstigen Freiräumen der Zug- oder Druckelemente oder deren Gelenke, Anschläge etc.) aktiv wölben soll (z.B. Fig. 19).

Bei der in dieser Figur dargestellten Ausführung der Wölbmechanik ist je nach Stellung des Hebels H (strichlierte oder stark ausgezogene Stellung) von einer minimalen bis zu einer maximalen Wölbung jede gewünschte Form erzielbar. Je nach Positionierung des Hebels H entlang der mit Richtungspfeilen versehenen Linie IHV kann eine interne Höhenverschiebung des Wölbscheitels (Stellungen S₁, S₂, S₃) erfolgen.

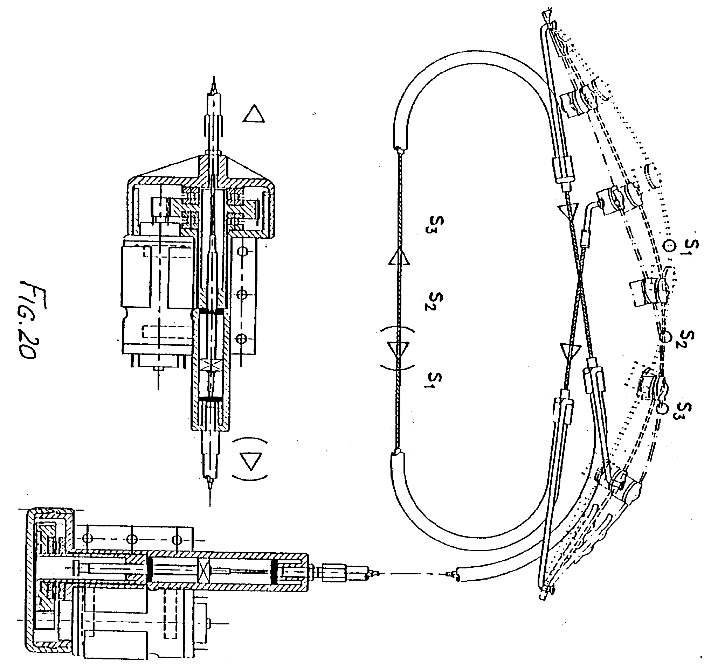

Die Fig. 20 zeigt eine ähnliche Ausführung, bei welcher die variable Wölbmöglichkeit der Mechanik und die interne Höhenverstellung über einen Bowdenzug, Linearmotor und Modulsystem erfolgt.

Die in der Beschreibung genannten Wölbmechaniken oder auch einzelne Elemente derselben können in Baukasten- bzw. Modulbauweise hergestellt und unter Verwendung geeigneter Verbindungselemente, z.B. fahrradspeichenartiger Elemente mit Köpfen, die in entsprechend gestaltete Bajonettschlitze od.dgl. einsetzbar sind, oder anderer Steck-, Clips-, Klemmverbindungen usw. jederzeit schnellstens montiert, ausgetauscht, repariert, variiert bzw. mit allen bisherigen oder künftigen beliebigen Bau- oder Konstruktionselementen kombiniert werden. Diese Modulbauweise ermöglicht eine individuelle Herstellung der Mechanik, da alle erfindungsgemäßen Elemente wahlweise untereinander austauschbar oder auch durch bereits vorgegebene (z.B. bei Einbau der Mechanik in einen bereits fertigen Sitz oder ein anderes Konstruktionselement) bzw. fremde Elemente ergänzbar sind. Erfindungsgemäße Wölbmechaniken können bisher verwendete Wölbmechaniken ersetzen oder zusätzlich zu diesen in beliebigen Winkellagen oder parallel in beliebigen Kombinationen angeordnet werden.

Die Wölbung kann mechanisch, elektrisch, pneumatisch usw., direkt oder durch Fernübertragung erfolgen, und zwar derart, daß der Wölbscheitel nach Wunsch in seiner Höhe eingestellt werden kann oder innerhalb der Konstruktion nach Wunsch hervortritt.

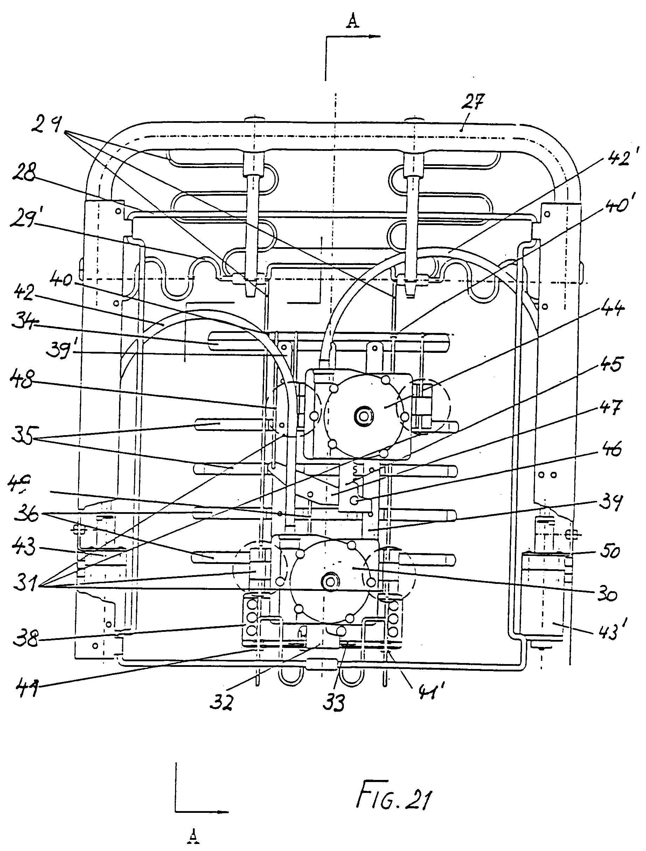

Fig. 21 zeigt eine Ausführung, bei der die Wölbmechanik in eine Rückenlehne integriert ist.

Die Rückenlehne wird beispielsweise von einem U-förmi- gen, nach unten zu offenen Rahmen 27 und einem Rahmenbügel 28 gebildet. Innerhalb dieses U-förmigen Rahmens sind zwei senkrecht verlaufende, am Rahmen befestigte Spanndrähte 29 angeordnet. Diese Spanndrähte können in ihrem oberen Bereich, wie in Fig. 21 dargestellt, beispielsweise mäanderförmig ausgebildet sind. Ebenfalls im oberen Bereich der Spanndrähte durchläuft ein weiterer Spanndraht 29' die Rückenlehne horizontal. Im unteren, im wesentlich geradlinigen (für die Aufnahme der Getriebe eventuell gekröpften) Bereich der beiden Spanndrähte 29 ist ein erstes Getriebe 30 mittels Klemmelementen 31 fixierbar an ihnen angeordnet. Das erste Getriebe 30 steht über eine Schnecke, ein Schneckenrad und ein Ritzel (alle nicht dargestellt) mit einer ersten Zahnstange 32 in Wirkverbindung. Die Zahnstange 32 ist in ihrem unteren Bereich von einer Querwelle 33 durchsetzt. Das Getriebe weist eine große Übersetzung auf, die Verstellung der Stütze kann daher mit geringen Kräften und kleinen Drehmomenten erfolgen. Das Druckelement wird von den Spanndrähten 29, welche auch als Gleitdrähte dienen, aufgenommen, d.h., das Druckelement ist auf ihnen verschiebbar angeordnet.

Das Gesamtdruckelement setzt sich vorteilhafterweise aus einem oberen Abschlußband 34, in Abstand zueinander angeordneten Querrippen 35, 36, 37 und vorzugsweise einem im unteren Bereich der Rückenlehne angeordneten Stützblech 38 für den Beckenrand der Wirbelsäule, in dieser Reihenfolge, zusammen. Diese Elemente sind mittels wenigstens zweier, im wesentlichen zu den Spanndrähten parallel verlaufender Druckbänder 39 verbunden. Das Abschlußband und das Stützblech sind über je zwei Gleitösen 40, 40' und 41, 41' an den Spanndrähten verschiebbar angeordnet.

Das erste Getriebe 30 ist über eine biegsame Welle 42 mit einem beispielsweise im unteren Bereich der Rückenlehne angeordneten Elektromotor 43 verbunden. Bei Betätigung des ersten Getriebes 30 erfolgt eine Höhenverstellung des gesamten Druckelementes. Am oberen Abschlußband 34 ist ein zweites Getriebe 44 angeordnet, welches äquivalent dem ersten Getriebe 30 über eine große Übersetzung mit einer zweiten Zahnstange 45 in Wirkverbindung steht. Auch dieses Getriebe wird über eine von einem Elektromotor 43' betriebene biegsame Welle 42' angetrieben. Dieses zweite Getriebe ist starr am oberen Teil des Gesamt-druckelementes angeordnet. Vorzugsweise sind die beiden Getriebe baugleich und können zufolge verringerter Kräfte aus Kunststoff sein. Vorteilhafterweise können die beiden über Klemmelemente 31 an den Spanndrähten 29 angeordneten Getriebe einfach abgenommen sowie aufgesteckt werden. Die beiden Getriebe sind vorteilhafter Weise aus Kunststoff, Preßstoff, Metall-Druckguß oder Blech.

Das Gesamtdruckelement muß nicht notwendigerweise wie oben beschrieben aufgebaut sein, beispielsweise kann es auch aus einer einzigen oder mehreren Wölbplatten aus einem beliebigen, druckfesten, aber biegsamen Material bestehen, welche wiederum geschlossen, perforiert oder gitterförmig oder in Materialdicke und -festigkeit an einzelnen Stellen unterschiedlich ausgeführt sein kann (können), um die Erzielung verschiedener oder gleicher Kurvenformen in unterschiedlichen Bereich zu ermöglichen.

An der zweiten Zahnstange 45 ist über einen Gelenkbolzen 46 ein in diesem Ausführungsbeispiel dreieckförmiger Waagebalken 47 angelenkt. Der Waagebalken weist zwei Bohrungen, beispielsweise eine in seiner Mitte und eine in seinem dem Gelenkbolzen gegenüberliegenden Ende, auf. Die in Fig. 21 dargestellt linke Bohrung des Waagebalkens ist über eine starre Speiche 48 mit dem oberen Abschlußband 34 und über eine weitere Speiche 49 mit dem Stützblech 38 verbunden.

Bei Betätigung der zweiten Zahnstange erfolgt eine Krümmung des Druckelementes, da sich der Abstand zwischen Stützblech und Abschlußband verändern muß, die Speichen jedoch starr sind. Je nach Krümmung wandert der Scheitelpunkt nach oben oder nach unten. Die Stellung des Waagebalkens (von leicht schräg nach oben bis leicht schräg nach unten) hängt von der Stärke der eingestellten Wölbung der Stütze ab. Je nach Anordnung der mittleren Bohrung des Waagebalkens 47 kann ein unterschiedliches Übersetzungsverhältnis geschaffen werden. Durch die Längenänderung der zweiten Zahnstange wird der vom Gelenkbolzen gebildete Drehpunkt mitgenommen. Ist beispielsweise der Abstand der Bohrungen gleich groß, wird die Speiche einen nur halb so großen Weg wie die zweite Zahnstange machen (halbe Kraft - doppelter Weg).

Da die Wölbmechanik mittels der vier Ösen, welche auch durch Gleitsteine ersetzt werden können, über die Spanndrähte gleitet, erweist es sich als besonders vorteilhaft, diese als Einschnappmechanismen auszubilden, beispielsweise als offene, insbesondere U-förmige, sich zur Öffnung hin wieder verengende Elemente.

Dadurch läßt sich die gesamte Konstruktion wie ein Modul behandeln und bei Montage oder notwendiger Reparatur sekundenschnell auswechseln bzw. montieren. Die Motoren 43, 43' sind vorteilhafterweise über je ein Befestigungsblech 50 am Rahmen angeordnet.

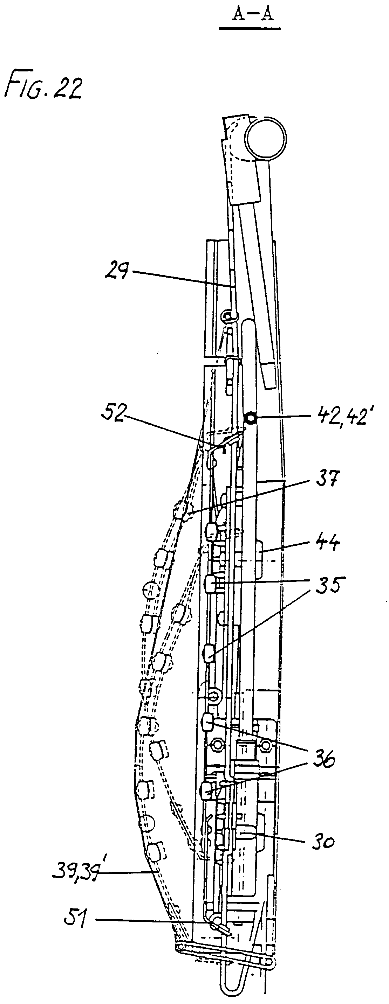

Wahlweise alle oder einzelne der "Zug"-bedingten Elemente der Konstruktion sind entweder beispielsweise durch die gekröpften Enden (51, 52) des Gesamtdruckelementes, wie aus Fig. 22 ersichtlich, welche einen Schnitt entlang der Linie A-A in Fig. 21 darstellt, oder durch separate Abstandhalter bzw. Konstruktionselemente oder durch eine leichte Vorspannung der Zugelemente usw., in einem Abstand zum Gesamtdruckelement (oder Teilen davon) gehalten, wodurch die Wölbrichtung bestimmt ist Weiters ist auch eine Ausführung mit einem gemeinsamen Antrieb denkbar.

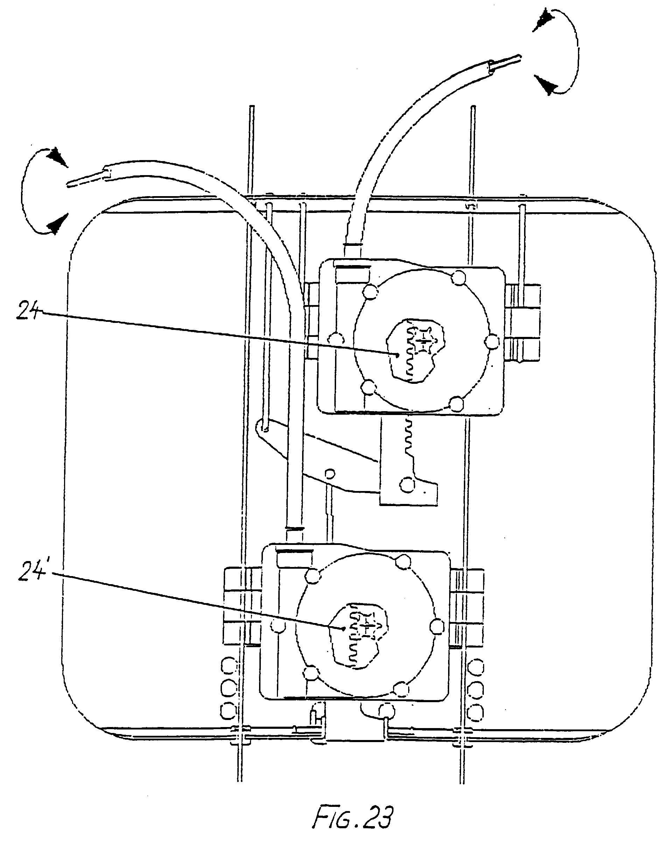

Eine allgemeine Darstellung dieser Variante zeigt Fig. 23.

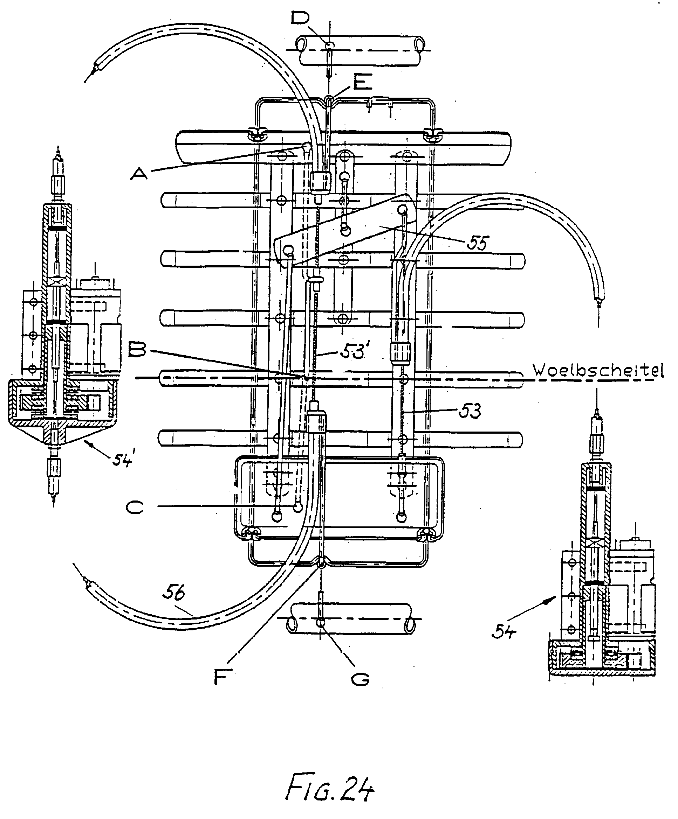

Eine weitere, der Ausbildung nach Fig. 21 ähnliche Ausführung zeigt Fig. 24. Der Antrieb der Wölbmechanik erfolgt hier über Bowdenzüge 53 und zwei Linearmotoren 54, 54'. Der in der Figur rechts angeordnete Linearmotor 54 dient der direkten bzw. indirekten Regelung der Wölbung.

Eine direkte Wölbungssteuerung erfolgt dann, wenn der Bowdenzug direkt an der Wölbmechanik angreift. Die in der Figur dargestellte Steuerung über einen Übersetzungs-Waagebalken 55 ist eine indirekte Steuerung. Diese kann auch über Umlenkrollen, Bögen usw. erfolgen.

Die in der Figur links dargestellte Steuerung zeigt einen doppeltwirkenden Linearantrieb 54', der auf der einen Seite das Bowdenzug-Seil 53' einzieht und an der gegenüberliegenden Seite eben dieses Seil nachläßt. Damit kann beispielsweise die Höhenverschiebung des Druckelements entlang der Spann- oder Gleitdrähte, aber auch in oder auf Gleitschienen, in oder auf Gleitflächen, in Schalenkörpern oder frei im Raum direkt, auf ein oder mehreren Bowdenzug-Seilen schwebend oder hängend, durchgeführt werden.

Die das Bowdenzug-Seil 53' führende Bowdenzughülle 56 wird beispielsweise am Führungsdraht oben und unten mit einer eingehängten Ösenspeiche oder direkt am Rahmen (bei den Punkten D, E, F, G) eingehängt. Das bewegliche Bowdenzug-, aber auch jedes beliebige Zug- oder Steuerseil kann nun an beliebigen Punkten über eine oder mehrere Quetsch- oder Schraubverbindungen angeklemmt werden und beliebig über einen Steuerhebel, aber auch über ein beliebiges Gestänge, einen Seilzug oder eine Schubverbindung an einem beliebig vorwählbaren Punkt (in dieser Figur als Möglichkeiten mit A, B und C gekennzeichnet) befestigt werden, wodurch bei Verschieben des Seiles innerhalb des Bowdenzuges oder einer der vorgenannten Einrichtungen die Wölbmechanik synchron mit der Seilverschiebung mitbewegt wird. Erfolgt die Verbindung nun am obersten Punkt der Wölbmechanik (A), so wandert beim Wölben, durch die Verkürzung der gesamten Wölbfläche auch der Scheitel im Verhältnis der Langen zwischen Oberkante und Scheitel sowie Scheitel und Unterkante exakt im selben Prozentsatz nach oben.

Das kann vor allem vom medizinischen Standpunkt aus gesehen sehr wichtig sein, da bei einer Wölbung der Wölbmechanik für "Kreuzhohl-Stellung" der Mensch gleichzeitig auch etwas gestreckt wird.

Erfolgt die Befestigung im Scheitel, so bleibt der Wölbscheitel, bezogen beispielsweise auf die Sitzfläche, konstant. Bei einer Verbindung am untersten Punkt der Mechanik (C), wird beim Wölben die gesamte Längenverkürzung durch das Wölben nur am obersten Ende der Wölbmechanik wirksam und alle anderen Punkte wie auch der Wölbscheitel verlagern sich nur in einem prozentuellen Verhältnis der verschiedenen Längen der einzelnen Wölbmechanikhälften zueinander nach unten.

Der Wölbscheitel bleibt hier natürlich auch relativ zum Menschen gesehen erhalten, da der Mensch beim Krümmen der Wirbelsäule (die zuletzt genannte Ausführungsform paßt für diesen Fall) etwa kleiner wird und die Lordose damit leicht
nach unten sinkt.

Die jeweilige Fixierung hängt also vorderhand davon ab, ob man mit dem Menschen synchron mitgehen will. Bei einer aktiven Stützung des Rückens muß man den Scheitel fixieren. Dann kann sich der Mensch beim Kleinerwerden durch Kreuzhohl-Wölben an dem, bezogen auf die Höhe, ruhenden Scheitel voll abstützen. Dadurch trägt die Wölbmechanik und nicht die Wirbelsäule das Oberkörpergewicht.

Weiteres ist eine Einstellung einer nacheilenden oder voreilenden Phasenverschiebung zwischen dem fixen Scheitel der Lordose und dem Scheitel der Wölbmechanik denkbar, d.h., es erfolgt ein Über- bzw. Unterkompensieren des Scheitels.

Die Wölbmechanik kann selbstverständlich auch als Zusatz zu anderen Konstruktionen angewendet oder in solche integriert werden (beispielsweise Aufstecken der Mechanik auf eine bereits vorhandene Lehne). Weiters sei noch darauf verwiesen, daß die Mechanik oder Elemente davon in Wirkverbindung mit einer Memory-Einrichtung stehen können, wobei Wölbung und Scheitelstellung programmiert werden und sich unter Verwendung von Chip, Magnetkarte, Tastendruck usw. selbsttätig in die programmierte Stellung bringen oder sich mechanisch, z.B. mit Hilfe eines Vierweg-(Taumel-)schalters die gewünschte (benötigte) Wölbungshöhe bzw. Scheitelpunkt-Verlagerung einstellen lassen.

Zufolge dieser Ausführung der Wölbmechanik, bei der die Steuereinrichtung mit dem Bowdenzug geklemmt wird und die Einrichtung ihren Angriffspunkt beliebig wählbar an der Mechanik haben kann, können beispielsweise vorgegebene Randbedingungen wie harte oder weiche Polsterung, verschieden gewünschte Aufhängung der Mechanik in einem vorgegebenen Rahmen usw. einfach und auf jede gewünschte Art berücksichtigt werden, ohne die Funktion der Wölbmechanik in Frage zu stellen.

Es können also nicht nur die Bewegungen beispielsweise über- oder unterkompensiert werden, sondern auch die jeweiligen Sitzkonstruktionen, Polstermaterialien, Überzüge, Aufhängungen usw. voll berücksichtigt werden.

Die oben an Hand von Sitzlehnen beispielsweise beschriebene erfindungsgemäße Wölbmechanik kann selbstverständlich auch auf vielen anderen Gebieten eingesetzt werden, z.B. bei medizinischen oder Sportgeräten, Spielzeug, Rettungsgeräten, für die verschiedensten Stütz- und Tragkonstruktionen usw.

## Patentansprüche

1. Wölbmechanik mit einem Druckelemente und mehrere Querverbindungsorgane umfassenden oder aus einem Stück bestehenden Gesamtdruckelement sowie wenigstens einem an diesem angreifenden Zugelement und einer zugeordneten Spannvorrichtung dafür, dadurch gekennzeichnet, daß im oberen und unteren Bereich, vorzugsweise an einem Querverbindungsorgan (13,13') des zu wölbenden Abschnittes des Gesamtdruckelementes ein oder mehrere in der und/oder parallel zur Mittelachse des Gesamtdruckelementes verlaufende vertikale Zug- oder Druckelemente (1,1',2,2'), vorzugsweise Stab oder Seil, angreifen.

2. Wölbmechanik nach Anspruch 1, dadurch gekennzeichnet, daß sie einen Rahmen ( 1',1'') und in den Rahmen eingesetzte, von mindestens einer Verstellvorrichtung (19') betätigbare Druckelemente, vorzugsweise Druckbänder oder -flächen, umfaßt, und daß die vertikal verlaufenden Abschnitte des Rahmens über mindestens eine Verstellvorrichtung (18) längsvariable Druckelemente sind.

3. Wölbmechanik nach Anspruch 1, dadurch gekennzeichnet, daß sie einen an mehreren Stellen geschlitzten, überlappenden oder faltenbalgähnlichen Wölbkörper umfaßt und daß zumindest an diesen Stellen mit einem oder mehreren Spannmechanismen versehene Zugelemente zum Schließen bzw. öffnen dieser Bereiche angreifen, wodurch eine Krümmung des Wölbkörpers in jede beliebige, vorbestimmbare Richtung erzielbar ist (Fig.18).

4. Wölbmechanik nach den Ansprüchen 1 und 2, dadurch gekennzeichnet, daß das Gesamtdruckelement mindestens zwei vertikal verlaufende Druckelemente (1,1') und senkrecht oder in einem anderen Winkel zu diesen angeordnete und mit ihnen verbundene oder aus einem Stück gefertigte Querrippen (13,13') umfaßt, welche ein oberes (14) und ein unteres (8) oder ein dazwischenliegendes Abschlußband aufweisen.

5. Wölbmechanik nach Anspruch 4, dadurch gekennzeichnet, daß die vertikal verlaufenden Druckelemente Druckstäbe und Druckflächen sind.

6. Wölbmechanik nach zumindest einem der vorhergehenden Ansprüche, dadurch gekennzeichnet, daß sie eine Versteifungs- oder Stützplatte (8), z.B. im unteren Bereich aufweist.

7. Wölbmechanik nach Anspruch 4, dadurch gekennzeichnet, daß zwischen und parallel zu den Druckelementen ein Zug- oder Druckhilfsband (9) bzw Sperrband angeordnet ist.

8. Wölbmechanik nach Anspruch 1 oder 6, dadurch gekennzeichnet, daß das Gesamtdruckelement eine Wölbplatte ist (Fig.23).

9. Wölbmechanik nach Anspruch 8, dadurch gekennzeichnet, daß die Wölbplatte geschlossen und gleichmäßig dick oder an verschiedenen Stellen ungleich dick, steif, perforiert oder derart gitterförmig ist, daß beim Wölben ein Kreisbogen oder eine bestimmte andere Kurvenform erzielbar ist, oder daß äußere oder innere Kräfte an einzelnen Stellen gleich oder verschieden stark, bzw. hart oder elastisch aufgenommen bzw. abgestützt werden können.

10. Wölbmechanik nach zumindest einem der vorhergehenden Ansprüche, dadurch gekennzeichnet, daß die Spannvorrichtung aus mindestens einem Spannschloß (3) besteht.

11. Wölbmechanik nach Anspruch 10, dadurch gekennzeichnet, daß das Spannschloß (3,3',17) über ein Handrad, einen Hebel, Schieber oder dgl. betätigbar ist und selbstsperrend, einrastbar oder mit Eigenfederkraft usw. ausgerüstet ist (Fig.8a; Fig.8').

12. Wölbmechanik nach Anspruch 10, dadurch gekennzeichnet, daß die Zugelemente ein oder mehrere mit dem Spannschloß verbundene Seile oder Zugstangen oder Speichen (2,2'), wobei ein oder mehrere Zugelemente im Abschluß-, Druck-, Zug- oder Zughilfsband (9) und (das) andere Zugelement(e) in der Stützplatte (8) oder einem anderen Abschluß-, Quer-, Druck- oder Zughilfsband eingehängt sind (Fig.1).

13. Wölbmechanik nach zumindest einem der vorhergehenden Ansprüche, dadurch gekennzeichnet, daß die Wölbmechanik, wie an sich bekannt, in ihren Eckbereichen Federn (16,16'), Haken, Seile, Bänder zum Einhängen in den Rahmen oder eine Schale oder Fläche einer Rückenlehne oder sonstigen Konstruktion aufweist.

14. Wölbmechanik nach zumindest einem der vorhergehenden Ansprüche, dadurch gekennzeichnet, daß innerhalb des von einem starren oder längenvariablen Rahmen bzw. der Schale oder Fläche gebildeten Bereiches zwei oder mehrere im wesentlichen senkrecht verlaufende, mit dem Rahmen, der Schale od. dgl. elastisch oder fest verbundene Spanndrähte, Bänder, Schienen od. dgl. angeordnet sind, und daß das Druckelement über Gleitelemente an diesen Spanndrähten, Bändern, Schienen od. dgl. bewegbar angeordnet ist (Fig.23).

15. Wölbmechanik nach Anspruch 14, dadurch gekennzeichnet, daß die Spannvorrichtung mit einem sich innerhalb des Rahmenbereiches im wesentlichen horizontal erstreckenden Waagebalken (7) in dessen einem äußeren Bereich verbunden ist und der Waagebalken (7) in seinem mittleren und seinem anderen äußeren Bereich mit Druck-, Sperr-, Quer-, Abschluß-, Hilfs- oder Zugelementen (2,2',2''') verbunden ist, welche alternierend am oberen und unteren Bereich des Gesamtdruckelementes angreifen (Fig.4).

16. Wölbmechanik nach den Ansprüchen 14 oder 15, dadurch gekennzeichnet, daß die Spannvorrichtung -mindestens ein vorzugsweise von einem Linearmotor bzw. -antrieb oder Hebel, Schrauben (22), Schnecke (23), Trommel, Winde angetriebener Bowdenzug (2'',10) oder Seil- oder Schlauch- oder Band- oder Kettenzug ist, der direkt am Gesamtdruck- oder Zugelement oder am Waagebalken (7) oder einem oder mehreren Querbändern, Hilfsbändern, Stütz- oder Querbändern angreift (Fig.4).

17. Wölbmechanik nach Anspruch 15, dadurch gekennzeichnet, daß die Spannvorrichtung eine Zahnstange (24,24') umfaßt, welche über einen Gelenkbolzen mit dem Waagebalken in Verbindung steht, wobei durch die Anordnung der Zugelemente eine Bewegung der Zahnstange eine Krümmung des Druckelementes bewirkt (Fig.23).

18. Wölbmechanik nach den Ansprüchen 15 und 17, dadurch gekennzeichnet, daß im unteren Bereich des Rahmens (27) ein Getriebe (30) an den Spanndrähten (29) fix angeordnet ist, welches eine mit dem Druckelement verbundene Zahnstange (32) umfaßt, wobei eine Bewegung der Zahnstange (32) eine Höhenverstellung des Gesamtdruckelementes als solches entlang der Spanndrähte (29) oder auf Gleitschienen, Bändern, in Schalen od. dgl. bewirkt (Fig.21).

19. Wölbmechanik nach den Ansprüchen 14 und 15, dadurch gekennzeichnet, daß das mit dem Linearantrieb (54') verbundene Bowdenzugseil (53') von zwei Bowdenzughüllen (56) geführt ist, wobei die eine im oberen und die andere im unteren Bereich der Spanndrähte, des Rahmens od. dgl. fix angeordnet ist, und daß das im Bereich des Gesamtdruckelementes frei laufende, zwischen den Hüllen (56) bewegbare Bowdenzugseil (53') mit einem Steuerhebel, einem Gestänge oder einer Seilzug- oder Schubverbindung verbunden ist, welche an einem beliebig wählbaren Punkt (A,B,C) der Wölbmechanik angreifen bzw. befestigt sein können (Fig. 20, 24).

20. Wölbmechanik nach den Ansprüchen 14 bis 18, dadurch gekennzeichnet, daß der Waagebalken die Kräfte reduziert.

21. Wölbmechanik nach den Ansprüchen 14 bis 18, dadurch gekennzeichnet, daß das Getriebe und die Spannvorrichtung durch Klemmelemente abnehmbar sowie aufsteckbar sind (Fig. 24).

22. Wölbmechanik nach Anspruch 14, dadurch gekennzeichnet, daß die Gleitelemente Ösen sind.

23. Wölbmechanik nach Anspruch 22, dadurch gekennzeichnet, daß die ösen als offene, sich zur Öffnung hin verengende Schnappelemente ausgebildet sind.

24. Wölbmechanik nach den Ansprüchen 14 bis 18, dadurch gekennzeichnet, daß das Getriebe und die Spannvorrichtung je eine Schnecke, ein Schneckenrad und ein Ritzel umfassen und über je eine flexible Welle (42,42') von je einem Motor (43,43') angetrieben werden (Fig.21).

25. Wölbmechanik nach Anspruch 24, dadurch gekennzeichnet, daß die beiden Motore in der die Wölbmechanik aufnehmenden Konstruktion, z.B. der Rückenlehne angeordnet sind (Fig.21).

26. Wölbmechanik nach Anspruch 24, dadurch gekennzeichnet, daß das Getriebe und die Spannvorrichtung aus Kunststoff, Preßstoff, Metall-Druckguß oder Blech sind.

27. Wölbmechanik nach Anspruch 26, dadurch gekennzeichnet, daß das Gesamtdruckelement oder Teile davon aus Metall, Kunststoff oder Holz sind.

28. Wölbmechanik nach zumindest einem der Ansprüche 1 bis 9, 13, dadurch gekennzeichnet, daß die Spannvorrichtung ein in den Zugelementen frei hängender Doppelexzenter ist (Fig.11).

29. Wölbmechanik nach zumindest einem der Ansprüche 1 bis 9, 13, dadurch gekennzeichnet, daß die Spannvorrichtung ein mit einem selbstsperrenden oder fixierbaren Umlenk- oder übersetzungshebel verbundenes Schneckengetriebe ist.

30. Wölbmechanik nach zumindest einem der Ansprüche 1 bis 9, 13, dadurch gekennzeichnet, daß die Spannvorrichtung ein Doppelgelenkspannhebel ist (Fig. 10).

31. Wölbmechanik nach zumindest einem der Ansprüche 1 bis 9, 13, dadurch gekennzeichnet, daß die Spannvorrichtung aus Zahnstangen, Bowdenzug und Seilspulen besteht (Fig. 6, 16).

32. Wölbmechanik nach zumindest einem der vorhergehenden Ansprüche, dadurch gekennzeichnet, daß der Angriffspunkt oder der Durchtrittspunkt eines flexiblen oder starren Zugelementes am oder durch das Druckelement gelenkig gelagert ist.

33. Wölbmechanik nach zumindest einem der vorhergehenden Ansprüchen, dadurch gekennzeichnet, daß das Zugelement bzw. das Druckelement mit einer Zug- (4) oder Druckfeder (5) oder einem dehnbaren Material, z.B. Gummi, welches an frei wählbaren Punkten des Druckelementes oder an einem Sperrmechanismus angreift, versehen sind, um die Zug- bzw. Druckkräfte möglichst klein zu halten (Fig. 6).

34. Wölbmechanik nach zumindest einem der vorhergehenden Ansprüche, dadurch gekennzeichnet, daß sie ein(en) Doppelspannschloß (18) oder -spannhebel oder Doppelgelenkspannhebel (7') oder einen oder mehrere beliebige Zug- und/oder Druckmechanismen sowohl innerhalb der Druck- als auch Zugelemente umfaßt, der bzw. die gleichzeitig oder separat sowohl Zug als auch Druck auf die Zug- oder Druckelemente der Wölbmechanik(en) ausübt (ausüben) (Fig.9, 10).

35. Wölbmechanik nach zumindest einem der vorhergehenden Ansprüche, dadurch gekennzeichnet, daß mehrere Wölbmechaniken gegeneinander oder summierend oder überlappend geschaltet und die Zugelemente so angeordnet sind, daß sich ihre Wirkung summiert oder aufhebt, und daß wahlweise eines der Zug- oder Druckelemente für sich allein schaltbar ist, wodurch mehrere Wölbungen innerhalb einer Wölbmechanik ausführbar sind (Fig.19).

36. Wölbmechanik nach Anspruch 2, dadurch gekennzeichnet, daß der als Druckelement ausgebildete Rahmen mehrmals unterbrochen ist und an diesen Unterbrechungen in seiner Länge variierbar ist (Fig. 10, 15).

37. Wölbmechanik nach den Ansprüchen 1 oder 2, dadurch gekennzeichnet, daß die Zug- und Druckelemente gegengleich oder differenziert in der Zug- oder Druckzone verlängerbar oder verkürzbar sind (Fig.9 - 9e).

38. Wölbmechanik nach Anspruch 10, dadurch gekennzeichnet, daß das Spannschloß (11) mit verschieden langen Zug- und Druckstäben versehen ist und die Betätigungseinrichtung für das Spannschloß dadurch an beliebigen Punkten einer mit der Wölbmechanik versehenen Konstruktion, z.B. einer Sitzkonstruktion herausführbar ist (Fig.6).

39. Wölbmechanik nach Anspruch 10, dadurch gekennzeichnet, daß das Spannschloß (11) stufenlos verstellbar, selbsthemmend und mit definierbarer Minimum - Maximimeinstellung versehen ist.

40. Wölbmechanik nach Anspruch 10, dadurch gekennzeichnet, daß das Spannschloß (22,23;11) an jedem beliebigem Punkt einer Konstruktion, z.B. einer Sitzkonstruktion,insbesondere auch außerhalb der Wölbkonstruktion anordenbar ist (Fig.4,6).

41. Wölbmechanik nach den Ansprüchen 1, 2 oder 3, dadurch gekennzeichnet, daß die wirksamen Druckstäbe oder -bänder in den seitlichen äußeren Randzonen des Gesamtdruckelementes angreifen und somit die Wölbmechanik in den äußeren Randzonen einer Schalenform die Hauptwölbkräfte entwickelt (Fig.6)

42. Wölbmechanik nach Anspruch 41, dadurch gekennzeichnet, daß die Wölbfläche in Querrichtung gesehen Schalenform hat und die Druckzonen im äußeren Randbereich oder dessen Nähe angeordnet sind (Fig. 7').

43. Wölbmechanik nach Anspruch 42, dadurch gekennzeichnet, daß die Elemente der Wölbfläche ein- oder mehrteilig sind.

44. Wölbmechanik nach Anspruch 42, dadurch gekennzeichnet, daß die beiden Enden der Wölbfläche oder die Druckelemente Ausnehmungen zum Aufnehmen von Spanndrähten aufweisen, wobei die gesamte Wölbmechanik entlang dieser Spanndrähte verschiebbar und einfach anordenbar und nach eingestellter Wölbung, zentrisch oder exzentrisch zum Wölbscheitel, frei bewegbar ist (Fig.16).

45. Wölbmechanik nach einem der vorhergehenden Ansprüche, dadurch gekennzeichnet, daß innerhalb des vom Rahmen einer Rückenlehne gebildeten Bereiches zwei oder mehrere senkrecht verlaufende, am Rahmen fest angeordnete Spanndrähte (29) vorgesehen sind, daß die Spanndrähte (29) ein auf ihnen über Gleitelemente (40, 40' bzw 41, 41') bewegbar angeordnetes Gesamt-Lordose-Druckelement aufnehmen, daß an den Spanndrähten im unteren Bereich der Rückenlehne ein erstes Getriebe (30) mittels Klemmelementen (31) unverschiebbar fest angeordnet ist, welches über eine Schnecke, ein Schneckenrad und ein Ritzel mit einer ersten Zahnstange (32) in Verbindung steht und über eine flexible Welle (42) von einem Motor (43) angetrieben wird, wobei eine Bewegung der ersten Zahnstange (32) eine Höhenverstellung des Gesamt-Lordose-Druckelementes als solches entlang der Spanndrähte (29) bewirkt, daß die erste Zahnstange an ihrem unteren Ende von einem Querbolzen durchsetzt ist, daß das Gesamt-Lordose-Druckelement vorzugsweise aus einem oberen Abschlußband (34), einem im unteren Bereich der Rückenlehne angeordneten Stützblech (38) für den Beckenrand der Wirbelsäule, zwischen diesen beiden Elementen sowie im Abstand voneinander angeordneten, an sich bekannten Querrippen (34; 35, 36) und wenigstens zwei, im wesentlichen zu den Spanndrähten parallel angeordneten, das Abschlußband, die Querrippen und das Stützblech verbindenden biegsamen Druckbändern (39) besteht, wobei das Abschlußband den oberen und das Stützblech den unteren Bereich des Gesamt-Lordose-Druckelementes bilden, das im oberen Bereich des Gesamt-Lordose-Druckelementes, vorzugsweise am Abschlußband (34), ein zweites Getriebe (44) fest angeordnet ist, welches über eine Schnecke, ein Schneckenrad und ein Ritzel mit einer zweiten Zahnstange (45) in Verbindung steht und über eine flexible Welle (42') von einem Motor (43') angetrieben wird, daß im unteren Bereich der zweiten Zahnstange (45) über einen Gelenkbolzen ein sich im wesentlichen waagrecht erstreckender Waagebalken (47) angeordnet ist, der an seinem dem Gelenkbolzen entgegengesetzten Ende mit einer mit einer starren Speiche (48) im oberen Bereich des Druckelementes, vorzugsweise am oberen Abschlußband (34), und in seinem mittleren Bereich über eine weitere starre Speiche (49) am unteren Bereich des Druckelementes, vorzugsweise am Abstützblech, angeordnet ist, wobei eine Bewegung der zweiten Zahnstange (45) eine Krümmung des Druckelementes hervorruft (Fig.21).

46. Wölbmechanik nach den vorhergehenden Ansprüchen, dadurch gekennzeichnet, daß sie in Baukasten- bzw. Modulbauweise aufgebaut ist.

47. Wölbmechanik nach Anspruch 46, dadurch gekennzeichnet, daß Elemente zur Verbindung von Modulen miteinander bzw. mit anderen Konstruktionsteilen in Form von Fahrradspeichen mit Köpfen, die in entsprechende Ausnehmungen, z.B. Bajonettschlitze oder -löcher eingreifen, vorgesehen sind.

48. Vorrichtung dadurch gekennzeichnet, daß sie mit zumindest einer Wölbmechanik nach einem der Ansprüche 1 bis 47 ausgerüstet ist.

## Claims

1. Arching mechanism with a general pressure element comprising a pressure element and several transverse connection members or made in one piece, as well as at least one therein engaging traction element with a thereto assigned tension lock, characterized in that in the upper and lower region, preferably at a transverse connection member (13, 13') of the segment to be arched of the general pressure element, engage one or more vertical traction or pressure elements (1, 1', 2, 2'), preferably rods or wires, running in and/or parallelly to the median axis of the general pressure element.

2. Arching mechanism according to Claim 1, characterized in that it comprises a frame (1', 1'') and therein inserted pressure elements, preferably pressure strips or surfaces actuatable by at least one adjusting device (19'), and that the vertically running segments of the frame are pressure elements whose length can be varied by at least one adjusting device (18).

3. Arching mechanism according to claim 1, characterized in that it comprises a bulging body slotted on several places, overlapping, or designed like bellows and that at least these places acted upon by traction elements are provided with one or more tensioning mechanisms, for opening respectively closing these areas, whereby a curving of the bulging body in any desired, preselected direction can take place (Fig. 18).

4. Arching mechanism according to Claim 1 and 2, characterized in that the general pressure element has at least two vertically running pressure elements (1, 1') and transverse ribs running at a right or any other angle to the vertical elements and connected thereto or made in one piece, which have an upper (14) and lower (8) or an intermediate strip.

5. Arching mechanism according to Claim 4, characterized in that the vertically running pressure elements are pressure rods or pressure surfaces.

6. Arching mechanism according to at least one of the preceding claims, characterized in that it has a bracing or support plate (8), e.g. in the lower area.

7. Arching mechanism according to claim 4, characterized in that in between and parallelly to the pressure elements a traction or pressure-assisting strip (9), respectively locking strip is provided.

8. Arching mechanism according to claim 1 or 6, characterized in that the general pressure element is a bulging plate (Fig. 23).

9. Arching mechanism according to Claim 8, characterized in that the bulging plate is closed and evenly thick or in certain places unevenly thick, stiff, perforated or grid-like, so that during arching a circular or any other selected curved shape can be obtained, or that external or internal forces can be absorbed or supported at individual points with equal or different strength, rigidly or elastically.

10. Arching mechanism according to at least one of the preceding claims, characterized in that the tensioning mechanism consists of at least one tension lock (3).

11. Arching mechanism according to claim 10, characterized in that the tension lock (3, 3', 17) is actuated by means of a handwheel, a lever, slider or the like and is equipped to be self-locking, to snap shut or with its own spring force, etc. (Fig. 8a; Fig. 8').

12. Arching mechanism according to claim 10, characterized in that the traction elements are one or several wires, traction rods or spokes (2, 2') connected with the tension lock, whereby one or several traction elements are suspended in the end strip, pressure strip, traction or traction-assisting strip (9) and that (the) other traction element(s) are suspended in the support plate (8) or in another end strip, cross strip, pressure or pressure-assisting strip (Fig. 1).

13. Arching mechanism according to at least one of the preceding claims, characterized in that the arching mechanism as known per se has in its corner areas springs (16, 16'), hooks, wires, strips by means of which it is suspended within the frame, or in a shell, or the surface of backrest or any other construction.

14. Arching mechanism according to at least one of the preceding claims, characterized in that within the area defined by a rigid or length-variable frame of a shell or surface, two or more basically vertically running tension wires, strips, rails or the like are arranged, which are elastically or rigidly connected to the frame , the shell or the like and that the pressure element is movably arranged on these tension wires, strips, rails or the like by means of sliding elements (Fig. 23).

15. Arching mechanism according to Claim 14, characterized in that the tensioning mechanism is connected to a rocker lever (7) extending basically horizontally within the frame area, in the one outer area of this rocker lever and that the rocker lever (7) in its median and its other outer area is connected with pressure, locking, transverse, end, assisting or traction elements (2, 2', 2'''), which engage alternately at the upper and lower regions of the general pressure element (Fig. 4).

16. Arching mechanism according to Claim 14 or 15, characterized in that the tensioning mechanism is at least one bowden wire (2'', 10), or a cable or hose or strip or chain winch, driven preferably by a linear motor, respectively linear drive or lever, screws (22), worm (23), drum, winch, engaging directly at the general pressure elements, or on the rocker lever (7) or at one or more transverse strips, assisting strips, support or locking strips (Fig. 4).

17. Arching mechanism according to Claim 15, characterized in that the tensioning mechanism comprises a toothed rack (24, 24') which is connected via a pivot pin with the rocker lever, whereby due to the arrangement of the traction element, a movement of the toothed rack results in the curving of the pressure element (Fig.23).

18. Arching mechanism according to Claims 15 and 17, characterized in that in the lower area of the frame (27) a gearing (30) is affixed to the tension wires (29), which comprises a toothed rack (32) connected with the pressure element, whereby a movement of the toothed rack (32) produces a height-adjustment of the general pressure element itself along the tension wires (29) or on slide rails, strips, in shells or the like (Fig. 21).

19. Arching mechanism according to Claims 14 and 15, characterized in that bowden control wire (53') connected with the linear drive (54') is guided by two bowden-wire sleeves (56), whereby one is affixed to the upper and the other at the lower area of the tension wires, the frame or the like, that the bowden wire (53') running freely between the sleeves (56) in the area of the general pressure element is connected with control lever, rods, or a cable winch or thrust connection, which can engage, respectively be fastened at any selected point (A, B, C) of the arching mechanism (Fig. 20, 24).

20. Arching mechanism according to Claims 14 to 18, characterized in that the rocker lever reduces the forces.

21. Arching mechanism according to Claims 14-18, characterized in that the gearing and the tensioning mechanism can be removed and fastened by means of clamping elements (Fig. 24).

22. Arching mechanism according to Claim 14, characterized in that the sliding elements are eyes.

23. Arching mechanism according to Claim 22, characterized in that the eyes are open snap elements, narrowing down towards the opening.

24. Arching mechanism according to Claims 14 to 18, characterized in that the gearing and the tensioning device each comprise a worm, a wormwheel and a pinion and are each driven by a motor (43, 43') via a flexible shaft (42, 42') (Fig. 21).

25. Arching mechanism according to Claim 24, characterized in that both motors are arranged in the construction containing the arching mechanism, for instance the backrest (Fig. 21).

26. Arching mechanism according to Claim 24, characterized in that the gearing and the tensioning device are made of plastic material, molded material, diecast metal or sheet metal.

27. Arching mechanism according to Claim 26, characterized in that the general pressure element or parts thereof are made of metal, plastic material or wood.

28. Arching mechanism according to at least one of the Claims 1 to 9, 13, characterized in that the tensioning mechanism is double eccenter freely hanging in the traction elements (Fig. 11).

29. Arching mechanism according to at least one of the Claims 1 to 9, 13, characterized in that the tensioning mechanism is a worm gear connected with a self-locking or fixable shift or transmission lever.

30. Arching mechanism according to at least one of the Claims 1 to 9, 13, characterized in that the tensioning device is a double-jointed tensioning lever (Fig. 10).

31. Arching mechanism according to at least one of the Claims 1 to 9, 13, characterized in that the tensioning device consists of toothed racks, bowden wire and wire coils (Fig. 16, 16).

32. Arching mechanism according to at least one of the preceding claims, characterized in that the application point or penetration point of a flexible or rigid traction element is articulatedly supported.

33. Arching mechanism according to at least one of the preceding claims, characterized in that the traction element, respectively the pressure element is provided with a traction spring (4) or compression spring (5) or with a stretchable material, e.g. rubber, which engages at selectable points of the pressure element or the locking mechanism, in order to keep the traction, respectively compression forces as small as possible (Fig. 6).

34. Arching mechanism according to at least one of the preceding claims, characterized in that it comprises a double tension lock (18) or tensioning lever or double-jointed tensioning lever (7') or one or more of any desired traction and/or pressure mechanisms, inside the pressure as well as traction elements, which exerts (exert) simultaneously or separately traction as well as pressure on the traction or pressure elements of the arching mechanism(s) (Figs. 9, 10).

35. Arching mechanism according to at least one of the preceding claims, characterized in that several arching mechanisms are connected against each other, or to compound their action, or overlappingly and that the traction elements are arranged so that their actions can be compounded or cancel each other, and that selectively one of the traction or pressure elements can be separately engaged, which makes possible to create several bulges within one arching mechanism (Fig. 19).

36. Arching mechanism according to Claim 2, characterized in that the pressure element built as a frame is multiply interrupted and its length can be varied at this interruption points (Figs. 10, 15).

37. Arching mechanism according to Claims 1 or 2, characterized in that the traction and pressure elements can be lengthened or shortened in the traction or pressure zone, in an either counterbalanced or differentiated manner (Figs. 9 - 9e).

38. Arching mechanism according to Claim 10, characterized in that the tension lock (11) is provided with traction and pressure rods of various length and as a result the actuation device for the tension lock can be moved outside at any desired point of a construction provided with an arching mechanism, e.g. a seat construction (Fig. 6).

39. Arching mechanism according to Claim 10, characterized in that the tension lock (11) is steplessly adjustable, self-inhibiting and provided with a definable minimum and maximum setting.

40. Arching mechanism according to Claim 10, characterized in that the tension lock (22, 23; 11) can be arranged at any desired point of a construction, e.g. a seat construction, particularly also outside the arching mechanism (Figs. 4, 6).

41. Arching mechanism according to Claims 1, 2 or 3, characterized in that the effective pressure rods or strips engage in the lateral, outer edge zones of the general pressure element and thereby the arching mechanism develops the main bulging forces in the outer edge zones of a shell shape (Fig. 6).

42. Arching mechanism according to Claim 41, characterized in that the bulging surface, when seen in transverse direction, has a shell shape and the pressure zones are arranged in the outer edge zone or in its proximity (Fig. 7').

43. Arching mechanism according to Claim 42, characterized in that the elements of the bulging surface are made of one or several parts.

44. Arching mechanism according to Claim 42, characterized in that both ends of the bulging surface or the pressure element have recesses to accommodate the tension wires, whereby the entire arching mechanism is slidable and easily mountable along these tension wires and is freely movable centrally or eccentrically with respect to the apex of convexity, after the bulging has been completed (Fig. 16).

45. Arching mechanism according to one of the preceding claims, characterized in that within the area defined by the frame of a backrest, two or more vertically running tension wires (29) are provided which are rigidly affixed to the frame, that the tension wires (29) receive a general lordosis pressure element movable on the tension wires via sliding elements (40, 40' and respectively 41, 41'), that on the tension wires in the lower region of the backrest a first gearing (30) is unslidably and fixedly mounted by means of clamping elements (31), this gearing being in connection with a first toothed rack (32) via a worm, a wormwheel and a pinion and is driven via a flexible shaft (42) by a motor (43), whereby a movement of the first toothed rack (32) effectuates a height adjustment of the general lordosis pressure element itself along the tension wires (29), that the first toothed rack is traversed at its lower end by a crosstie, that the general lordosis pressure element consists preferably of an upper end strip (34), a support plate (38) arranged at the lower region of the backrest, for the support of the pelvic edge of the spinal column, of transverse ribs (34; 35, 36) known per se, arranged between these two elements as well as at a distance from each other, of at least two flexible pressure strips (39) basically parallel to the tension wires, connecting the end strip, the transverse ribs and the support plate, whereby the end strip forms the upper region and the support plate form the lower region of the general lordosis pressure element, that in the upper region of the general lordosis pressure element, preferably on the end strip (34) a second gearing (44) is rigidly connected , which via a worm, a wormwheel and a pinion is in working connection with a second toothed rack (45) and is driven via a flexible shaft (42') by a motor (43'), that in the lower area of the second toothed rack (45) a basically horizontally extending rocker lever (47) is mounted via a pivot pin, and at its end remote from the pivot pin, this rocker lever is connected to the upper region of the pressure element, preferably the support plate, via a further rigid spoke (49), whereby a movement of the second toothed rack (45) produces a curving of the pressure element (Fig.21).

46. Arching mechanism according to one of the preceding claims, characterized in that it is designed in the manner of building blocks or modules.

47. Arching mechanism according to Claim 46, characterized in that elements such as bicycle spokes with heads which for instance can engage in corresponding recesses, e.g. bayonet-type slits or holes, are provided for the connection of the modules with each other and with other construction components.

48. Device, characterized in that it is equipped with at least one arching mechanism as defined in Claims 1 to 47.

## Revendications

1. Mécanisme destiné à réaliser une courbure, comprenant un élément de poussée globale qui englobe des éléments de poussée et plusieurs organes de liaison transversale ou qui est constitué d'un seul tenant, ainsi qu'au moins un élément de traction en prise avec lui et un élément tendeur associé à cette fin, caractérisé par le fait qu'un ou plusieurs éléments de traction ou de pression verticaux (1, 1', 2, 2'), lesquels s'étendent selon l'axe médian de l'élément de poussée globale, et/ou parallèlement à celui-ci, en étant de préférence constitués par des tiges ou par des câbles, viennent en prise dans les régions supérieure et inférieure, et de préférence sur un organe de liaison transversale (13, 13') de la partie de l'élément de poussée globale qu'il s'agit de courber.

2. Mécanisme destiné à réaliser une courbure selon la revendication 1, caractérisé par le fait qu'il comprend un cadre (1', 1'') et des éléments de poussée qui sont de préférence des bandes de poussée ou des surfaces de poussée, qui sont montés dans le cadre et qui peuvent être actionnés par au moins un dispositif de réglage (19'), et par le fait que les parties du cadre qui s'étendent verticalement sont des éléments de pression dont la longueur peut varier par l'intermédiaire d'au moins un dispositif de réglage (18).

3. Mécanisme destiné à réaliser une courbure selon la revendication 1, caractérisé par le fait qu'il comprend un corps destiné à réaliser une courbure qui est fendu en plusieurs endroits, qui présente une disposition imbriquée ou qui est analogue à un soufflet, et par le fait que des éléments de traction munis d'un ou plusieurs mécanismes tendeurs sont en prise, du moins en ces endroits, pour ouvrir ces régions ou pour les fermer, respectivement, ce qui permet d'obtenir que le corps destiné à réaliser une courbure se courbe dans toute direction prédéterminée quelconque (figure 18).

4. Mécanisme destiné à réaliser une courbure selon les revendications 1 et 2, caractérisé par le fait que l'élément de poussée globale comprend au moins deux éléments de poussée (1, 1') qui s'étendent verticalement, ainsi que des ailettes transversales (13, 13') qui sont disposées perpendiculairement à ceux-ci ou sous un autre angle par rapport à ceux-ci, qui leur sont reliées ou qui sont fabriquées d'un seul tenant avec eux, et qui comprennent une bande terminale supérieure (14) et une bande terminale inférieure (8), ou une bande terminale située entre celles-ci.

5. Mécanisme destiné à réaliser une courbure selon la revendication 4, caractérisé par le fait que les éléments de poussée qui s'étendent verticalement sont des tiges de poussée et des surfaces de poussée.

6. Mécanisme destiné à réaliser une courbure selon l'une au moins des revendications précédentes, caractérisé par le fait qu'il comporte une plaque de raidissement ou d'appui (8), par exemple dans la région inférieure.

7. Mécanisme destiné à réaliser une courbure selon la revendication 4, caractérisé par le fait qu'une bande supplémentaire de traction ou de pression (9) ou une bande de blocage, respectivement, est disposée entre les éléments de poussée et parallèlement à ceux-ci.

8. Mécanisme destiné à réaliser une courbure selon la revendication 1 ou 6, caractérisé par le fait que l'élément de poussée globale est une plaque destinée à réaliser une courbure (figure 23).

9. Mécanisme destiné à réaliser une courbure selon la revendication 8, caractérisé par le fait que la plaque destinée à réaliser une courbure est fermée, d'une épaisseur régulière ou d'une épaisseur irrégulière en divers endroits, rigide, perforée ou réalisée en forme de grille d'une manière telle que l'on puisse obtenir lors de la courbure un arc de cercle ou une autre forme courbe déterminée, ou que des forces extérieures ou intérieures puissent être reçues ou supportées, respectivement, avec une intensité égale ou différente en divers endroits ou, respectivement, qu'elles puissent l'être d'une manière rigide ou élastique.

10. Mécanisme destiné à réaliser une courbure selon l'une au moins des revendications précédentes, caractérisé par le fait que le dispositif tendeur est constitué par au moins un ridoir (3).

11. Mécanisme destiné à réaliser une courbure selon la revendication 10, caractérisé par le fait que le ridoir (3, 3', 17) peut être actionné par l'intermédiaire d'un volant, d'un levier, d'une coulisse ou similaire, et qu'il est à blocage automatique ou à encliquetage ou pourvu d'une élasticité propre, etc. (figure 8a ; figure 8').

12. Mécanisme destiné à réaliser une courbure selon la revendication 10, caractérisé par le fait que les éléments de traction comprennent un ou plusieurs câbles ou tiges de traction ou tiges élastiques (2, 2'), un ou plusieurs des éléments de traction étant accrochés à la bande terminale, à la bande de pression ou de traction ou à la bande supplémentaire de traction (9), et l'autre ou les autres éléments de traction étant accrochés à la plaque d'appui (8) ou à une autre bande terminale, à une autre bande transversale ou de pression ou à une autre bande supplémentaire de traction (figure 1).

13. Mécanisme destiné à réaliser une courbure selon l'une au moins des revendications précédentes, caractérisé par le fait que le mécanisme destiné à réaliser une courbure, comme cela est connu en soi, comporte, dans les régions de ses coins, des ressorts (16, 16'), des crochets, des câbles ou des bandes pour l'accrocher dans le cadre ou dans une coque ou à une surface d'un dossier ou à une autre structure.

14. Mécanisme destiné à réaliser une courbure selon l'une au moins des revendications précédentes, caractérisé par le fait que deux ou plusieurs fils tendeurs, bandes, rails ou similaires, lesquels s'étendent verticalement, pour l'essentiel, en étant reliés au cadre, à la coque ou similaire d'une manière rigide ou élastique, sont disposés à l'intérieur de la région constituée par un cadre rigide ou de longueur variable ou, respectivement, par la coque ou par la surface, et par le fait que l'élément de poussée est monté mobile sur ces fils tendeurs, bandes, rails ou similaires par l'intermédiaire d'éléments de glissement (figure 23).

15. Mécanisme destiné à réaliser une courbure selon la revendication 14, caractérisé par le fait que le dispositif tendeur est relié à l'une des régions extérieures d'un levier (7) qui s'étend horizontalement, pour l'essentiel, à l'intérieur de la région du cadre, et que le levier horizontal (7) est relié dans sa région centrale et dans son autre région extérieure à des éléments de pression, de blocage, transversaux, terminaux, supplémentaires ou de traction (2, 2', 2''') qui viennent en prise alternativement avec la région supérieure et avec la région inférieure de l'élément de poussée globale (figure 4).

16. Mécanisme destiné à réaliser une courbure selon la revendication 14 ou 15, caractérisé par le fait que le dispositif tendeur est constitué par au moins un câble sous gaine (2'', 10) ou un tirant à câble ou à tuyau ou à bande ou à chaîne qui est de préférence entraîné par un moteur linéaire ou par un entraînement linéaire, respectivement, ou par un levier, des vis (22), une vis sans fin (23), un tambour ou un treuil, et qui vient en prise directement avec l'élément de poussée ou de traction globale, ou avec le levier horizontal (7), ou avec une ou plusieurs bandes transversales, bandes supplémentaires ou bandes d'appui ou transversales (figure 4).

17. Mécanisme destiné à réaliser une courbure selon la revendication 15, caractérisé par le fait que le dispositif tendeur comporte une crémaillère (24, 24') qui est en liaison avec le levier horizontal par l'intermédiaire d'un pivot, un déplacement de la crémaillère produisant une courbure de l'élément de poussée grâce à la disposition des éléments de traction (figure 23).

18. Mécanisme destiné à réaliser une courbure selon les revendications 15 et 17, caractérisé par le fait qu'une transmission (30) est montée fixe sur les fils tendeurs (29) dans la région inférieure du cadre (27), et qu'elle comprend une crémaillère (32) reliée à l'élément de poussée, un déplacement de la crémaillère (32) produisant un déplacement en hauteur de l'élément de poussée globale en tant que tel le long des fils tendeurs (29) ou sur des rails de glissement, des bandes, dans des coques ou similaires (figure 21).

19. Mécanisme destiné à réaliser une courbure selon la revendication 14 et 15, caractérisé par le fait que le câble sous gaine (53') qui est relié à l'entraînement linéaire (54') est guidé par deux gaines (56), l'une d'elles étant montée fixe dans la région supérieure des fils tendeurs, du cadre ou similaire et l'autre l'étant dans la région inférieure, et par le fait que la partie du câble sous gaine (53') qui s'étend librement dans la région de l'élément de poussée globale et qui est mobile entre les gaines (56) est reliée à un levier de commande, à une tringlerie ou à une liaison par câble de traction ou de poussée, laquelle peut venir en prise en un endroit (A, B, C) du mécanisme destiné à réaliser une courbure qui peut être choisi d'une manière quelconque ou être fixé à celui-ci, respectivement (figures 20 et 24).

20. Mécanisme destiné à réaliser une courbure selon les revendications 14 à 18, caractérisé par le fait que le levier horizontal réduit les forces.

21. Mécanisme destiné à réaliser une courbure selon les revendications 14 à 18, caractérisé par le fait que la transmission et le dispositif tendeur peuvent être enlevés et enfoncés grâce à des éléments de serrage (figure 24).

22. Mécanisme destiné à réaliser une courbure selon la revendication 14, caractérisé par le fait que les éléments de glissement sont des oeillets.

23. Mécanisme destiné à réaliser une courbure selon la revendication 22, caractérisé par le fait que les oeillets sont réalisés sous la forme d'éléments à encliquetage qui se rétrécissent vers l'ouverture.

24. Mécanisme destiné à réaliser une courbure selon les revendications 14 à 18, caractérisé par le fait que la transmission et le dispositif tendeur comprennent chacun une vis sans fin, une roue tangente et un pignon, et qu'ils sont entraînés chacun par un moteur (43, 43') par l'intermédiaire d'un arbre flexible (42, 42') pour chacun (figure 21).

25. Mécanisme destiné à réaliser une courbure selon la revendication 24, caractérisé par le fait que les deux moteurs sont disposés dans la structure qui reçoit le mécanisme destiné à réaliser une courbure, et par exemple dans le dossier (figure 21).

26. Mécanisme destiné à réaliser une courbure selon la revendication 24, caractérisé par le fait que la transmission et le dispositif tendeur sont en matière plastique, en une matière comprimée, en métal moulé sous pression ou en tôle.

27. Mécanisme destiné à réaliser une courbure selon la revendication 26, caractérisé par le fait que l'élément de poussée globale ou des parties de celui-ci sont en métal, en matière plastique ou en bois.

28. Mécanisme destiné à réaliser une courbure selon l'une au moins des revendications 1 à 9 et 13, caractérisé par le fait que le dispositif tendeur est un excentrique double qui est suspendu librement en étant accroché aux éléments de traction (figure 11).

29. Mécanisme destiné à réaliser une courbure selon l'une au moins des revendications 1 à 9 et 13, caractérisé par le fait que le dispositif tendeur est une transmission à vis sans fin reliée à un levier de déviation ou de transmission, respectivement, qui est à blocage automatique ou qui peut être fixé.

30. Mécanisme destiné à réaliser une courbure selon l'une au moins des revendications 1 à 9 et 13, caractérisé par le fait que le dispositif tendeur est un levier tendeur à double articulation (figure 10).

31. Mécanisme destiné à réaliser une courbure selon l'une au moins des revendications 1 à 9 et 13, caractérisé par le fait que le dispositif tendeur est constitué par des crémaillères, par un câble sous gaine et par des tambours destinés au câble (figures 6 et 16).

32. Mécanisme destiné à réaliser une courbure selon l'une au moins des revendications précédentes, caractérisé par le fait que le point d'attaque ou le point de passage d'un élément de traction flexible ou rigide est monté d'une manière articulée sur l'élément de poussée ou à travers celui-ci.

33. Mécanisme destiné à réaliser une courbure selon l'une au moins des revendications précédentes, caractérisé par le fait que l'élément de traction ou l'élément de pression, respectivement, est muni d'un ressort de traction (4) ou de compression (5) ou d'un matériau extensible, comme par exemple du caoutchouc, qui vient en prise en des points de l'élément de poussée que l'on peut choisir librement ou avec un mécanisme de blocage, afin de maintenir aussi faibles que possible les forces de traction ou de pression, respectivement (figure 6).

34. Mécanisme destiné à réaliser une courbure selon l'une au moins des revendications précédentes, caractérisé par le fait qu'il comprend un ridoir double (18) ou un levier tendeur double ou un levier tendeur à double articulation (7') ou un ou plusieurs mécanismes de traction et/ou de pression quelconques, tant à l'intérieur des éléments de pression qu 'à l'intérieur des éléments de traction, lequel ou lesquels, respectivement, exerce(nt) simultanément ou séparément tant une traction qu'une pression sur les éléments de traction ou de pression du ou des mécanismes destinés à réaliser une courbure (figures 9 et 10).

35. Mécanisme destiné à réaliser une courbure selon l'une au moins des revendications précédentes, caractérisé par le fait que plusieurs mécanismes destinés à réaliser une courbure sont montés en opposition ou en additionnant leurs effets ou en se chevauchant, et que les éléments de traction sont disposés d'une manière telle que leurs effets s'additionnent ou s'annulent, et par le fait que l'un des éléments de traction ou de pression peut être actionné au choix à lui seul, ce qui permet de réaliser plusieurs courbures à l'intérieur d'un mécanisme destiné à réaliser une courbure (figure 19).

36. Mécanisme destiné à réaliser une courbure selon la revendication 2, caractérisé par le fait que le cadre qui est réalisé sous la forme d'un élément de pression est interrompu en plusieurs endroits, et que sa longueur peut être modifiée aux endroits d'interruption (figures 10 et 15).

37. Mécanisme destiné à réaliser une courbure selon la revendication 1 ou 2, caractérisé par le fait que les éléments de traction et de pression peuvent être allongés ou raccourcis dans la zone de traction ou de pression d'une manière opposée ou différenciée (figures 9 à 9e).

38. Mécanisme destiné à réaliser une courbure selon la revendication 10, caractérisé par le fait que le ridoir (11) est pourvu de tiges de traction et de pression de longueurs différentes, et que le dispositif d'actionnement du ridoir peut être prévu de ce fait en des points quelconques d'une structure qui est pourvue du mécanisme destiné à réaliser une courbure et qui est par exemple une structure de siège (figure 6).

39. Mécanisme destiné à réaliser une courbure selon la revendication 10, caractérisé par le fait que le ridoir (11) peut être réglé continûment, qu'il est à blocage automatique et qu'il est pourvu d'un réglage minimum/maximum qui peut être défini.

40. Mécanisme destiné à réaliser une courbure selon la revendication 10, caractérisé par le fait que le ridoir (22, 23 ; 11) peut être disposé en un point quelconque d'une structure qui est par exemple une structure de siège, et en particulier aussi à l'extérieur de la structure destinée à être courbée (figures 4 et 6).

41. Mécanisme destiné à réaliser une courbure selon la revendication 1, 2 ou 3, caractérisé par le fait que les tiges ou les bandes de poussée actives viennent en prise dans les zones de bord latérales extérieures de l'élément de poussée globale, le mécanisme destiné à réaliser une courbure développant ainsi les forces de courbure principales dans les zones de bord extérieures d'un dispositif en forme de coque (figure 6).

42. Mécanisme destiné à réaliser une courbure selon la revendication 41, caractérisé par le fait que la surface de courbure présente la forme d'une coque lorsqu'elle est vue dans la direction transversale, et que les zones de poussée sont disposées dans la région des bords extérieurs ou à proximité de ceux-ci (figure 7').

43. Mécanisme destiné à réaliser une courbure selon la revendication 42, caractérisé par le fait que les éléments de la surface de courbure sont réalisés en une partie ou en plusieurs parties.

44. Mécanisme destiné à réaliser une courbure selon la revendication 42, caractérisé par le fait que les deux extrémités de la surface de courbure ou les éléments de poussée présentent des évidements destinés à recevoir des fils tendeurs, l'ensemble du mécanisme destiné à réaliser une courbure pouvant être déplacé le long de ces fils tendeurs et installé d'une manière simple, et pouvant être déplacé librement après que la courbure a été réglée, d'une manière centrée ou excentrée par rapport au sommet de la courbure (figure 16).

45. Mécanisme destiné à réaliser une courbure selon l'une au moins des revendications précédentes, caractérisé par le fait qu'à l'intérieur de la zone formée par le cadre d'un dossier, il est prévu deux ou plusieurs fils tendeurs (29) qui s'étendent perpendiculairement et qui sont montés fixes sur le cadre, par le fait que les fils tendeurs (29) reçoivent un élément de poussée globale de la région lombaire qui est disposé sur eux de manière mobile par l'intermédiaire d'éléments de glissement (40, 40', respectivement 41, 41'), par le fait qu'une première transmission (30) est montée fixe et sans pouvoir coulisser sur les fils tendeurs au moyen d'éléments de serrage (31), dans la région inférieure du dossier, en étant reliée à une première crémaillère (32) par l'intermédiaire d'une vis sans fin, d'une vis tangente et d'un pignon, et en étant entraînée par un moteur (43) par l'intermédiaire d'un arbre flexible (42), un déplacement de la première crémaillère (32) produisant un déplacement en hauteur de l'élément de poussée globale de la région lombaire en tant que tel le long des fils tendeurs (29), par le fait que la première crémaillère est traversée par une tige transversale à son extrémité inférieure, par le fait que l'élément de poussée globale de la région lombaire est constitué de préférence par une bande terminale supérieure (34), par une tôle d'appui (38) disposée dans la région inférieure du dossier et destinée à la partie de la colonne vertébrale qui est voisine du bassin, par des ailettes transversales (34 ; 35, 36), connues en elles-mêmes, qui sont disposées entre ces deux éléments et à distance les unes des autres, et par au moins deux bandes de poussée flexibles (39) qui sont disposées parallèlement aux fils tendeurs, pour l'essentiel, et qui relient entre elles la bande terminale, les ailettes transversales et la tôle d'appui, la bande terminale constituant la région supérieure de l'élément de poussée globale de la région lombaire et la tôle d'appui constituant sa région inférieure, par le fait qu'une deuxième transmission (44) est montée fixe dans la région supérieure de l'élément de poussée globale de la région lombaire, de préférence sur la bande terminale (34), en étant reliée à une deuxième crémaillère (45) par l'intermédiaire d'une vis sans fin, d'une vis tangente et d'un pignon, et en étant entraînée par un moteur (43') par l'intermédiaire d'un arbre flexible (42'), et par le fait qu'un levier (47) qui s'étend horizontalement, pour l'essentiel, est monté dans la région inférieure de la deuxième crémaillère (45) par l'intermédiaire d'un pivot, son extrémité opposée au pivot étant reliée par une tige rigide (48) à la région supérieure de l'élément de poussée, et de préférence à la bande terminale supérieure (34), et sa région centrale étant reliée par une autre tige rigide (49) à la région inférieure de l'élément de poussée, et de préférence à la tôle d'appui, un déplacement de la deuxième crémaillère (45) produisant une courbure de l'élément de poussée (figure 21).

46. Mécanisme destiné à réaliser une courbure selon les revendications précédentes, caractérisé par le fait qu'il est construit sous la forme d'éléments démontables ou sous forme modulaire, respectivement.

47. Mécanisme destiné à réaliser une courbure selon la revendication 46, caractérisé par le fait que des éléments destinés à relier des modules entre eux ou, respectivement, à d'autres parties de la construction sont prévus sous la forme de rayons de bicyclette pourvus de têtes qui pénètrent dans des évidements correspondants, et par exemple dans des fentes ou des trous à baïonnette.

48. Dispositif caractérisé par le fait qu'il est équipé d'au moins un mécanisme destiné à réaliser une courbure selon l'une des revendications 1 à 47.
